# EUROPÄISCHE PATENTSCHRIFT

(11) **EP 3 767 366 B1**
(45) Veröffentlichungstag und Bekanntmachung des Hinweises auf die Patenterteilung: **28.01.2026**
(21) Anmeldenummer: 20181418.3
(22) Anmeldetag: 22.06.2020
(51) Int. Cl.: G02B 23/18, G03B 17/48, G02B 23/02

(54) **FERNOPTISCHES GERÄT MIT BILDERFASSUNGSKANAL**
REMOTE OPTICAL APPARATUS WITH IMAGE DETECTION CHANNEL
APPAREIL OPTIQUE À DISTANCE POURVU DE CANAL DE DÉTECTION D'IMAGE

(30) Priorität: 19.07.2019 AT 506572019
(43) Veröffentlichungstag der Anmeldung: 20.01.2021
(73) Patentinhaber: Swarovski-Optik AG & Co KG., 6067 Absam (AT)
(72) Erfinder: SALZBURGER, Thomas, 6135 Stans (AT); HEINRICH, Christoph, 6071 Aldrans (AT); FRECH, Christoph, 6065 Thaur (AT); NINDL, Daniel, 6020 Innsbruck (AT); WIEDERMANN, Helmut, 6136 Pill (AT); SCHREITER, Gerd, 6113 Wattenberg (AT)
(74) Vertreter: Burger, Hannes

(56) Entgegenhaltungen:
- DE-A1- 10 245 100
- DE-A1- 102006 037 599

## Beschreibung

Die Erfindung betrifft ein fernoptisches Gerät und ein Beobachtungs- und Bilderfassungssystem.

Das Dokument DE 102 45 100 A1 beschreibt ein Binokular mit einem - neben den beiden Sichtkanälen - dritten Strahlengang eines Bilderfassungskanals, in dem ein CCD-Bildsensor zur Aufnahme von Bildern eines entfernten Objekts angeordnet ist. Bei diesem fernoptischen Gerät sind ein Stromversorgungsschalter (EIN/AUS-Schalter), ein Auslöseschalter und ein Modusauswahlschalter vorgesehen, die an der Deckwand des Hauptgehäuseteils angeordnet sind. Der Auslöseschalter wird zum Einschalten des Fotometrieschaltelements halb niedergedrückt und zum Betätigen des Auslöseschaltelements vollständig gedrückt. Die beiden Funktionen werden somit durch unterschiedliche Positionen des mechanischen Verstellwegs des Auslöseschalters aktiviert.

In dem Dokument DE 10 2000 037599 A1 wird eine optische Beobachtungsvorrichtung mit einer Fernbedienung beschrieben. Das Fernglas weist dabei eine in Form einer Bedientaste ausgebildete Auslöseeinheit auf, durch die eine Bildaufnahme oder das Starten und Stoppen einer Videoaufnahme ausgelöst werden kann.

Aufgabe der vorliegenden Erfindung war es, die Nachteile des Standes der Technik zu überwinden und Vorrichtungen und ein Verfahren zur Verfügung zu stellen, mittels derer ein Benutzer in der Lage ist, eine einfache, komfortable Bedienung eines fernoptischen Geräts vorzunehmen und mit dem Bilder von entfernten Gegenständen mit möglichst hoher Abbildungsqualität hergestellt werden können.

Diese Aufgabe wird durch eine Vorrichtung gemäß den Ansprüchen gelöst.

Die Erfindung betrifft ein fernoptisches Gerät umfassend zumindest einen Sichtkanal und einen Bilderfassungskanal mit einem Kameramodul, wobei der Sichtkanal und der Bilderfassungskanal mittels einer Verstellmechanik derart miteinander gekoppelt sind, dass ein in dem Sichtkanal betrachteter erster Bildausschnitt einem von dem Kameramodul aufgenommenen zweiten Bildausschnitt weitgehend entspricht, zumindest ein Schnittstellenmodul zum Aufbau einer Verbindung mit einem elektronischen Endgerät, eine Prozessoreinheit, zumindest eine

Speichereinheit, wobei die Speichereinheit zur Aufnahme von Funktionen und vorzugsweise Parametern ausgebildet ist, und eine elektronische Bedientaste. Dabei ist vorgesehen, dass das Auswählen einer Funktion aus den in der Speichereinheit aufgenommenen Funktionen durch eine Art der Betätigung der elektronischen Bedientaste definiert ist und das fernoptische Gerät dazu eingerichtet ist die Funktion durch die entsprechende Betätigung der Bedientaste (13) auszuführen, wobei die Art der Betätigung der elektronischen Bedientaste ausgewählt ist aus einer Gruppe, bestehend aus einer Betätigungsdauer der elektronischen Bedientaste, einer Betätigungskraft der elektronischen Bedientaste und einem Zeitintervall zwischen aufeinander folgenden Betätigungen der elektronischen Bedientaste, und wobei bei einer ersten Betätigungsdauer eine erste Funktion ausführbar ist und bei einer zweiten, von der ersten Betätigungsdauer unterschiedlichen Betätigungsdauer eine zweite, von der ersten Funktion unterschiedliche Funktion ausführbar ist, und wobei bei einer ersten Betätigungskraft eine erste Funktion ausführbar ist und bei einer zweiten, von der ersten Betätigungskraft unterschiedlichen Betätigungskraft eine zweite, von der ersten Funktion unterschiedliche Funktion ausführbar ist, und wobei bei einem ersten Zeitintervall zwischen einer ersten Betätigung und einer zweiten Betätigung eine erste Funktion ausführbar ist und bei einem zweiten Zeitintervall zwischen einer dritten Betätigung und einer vierten Betätigung eine zweite, von der ersten Funktion unterschiedliche Funktion ausführbar ist, und wobei die erste Funktion und die zweite Funktion ausgewählt sind aus der Gruppe bestehend aus Einschalten des fernoptischen Geräts, Ausschalten des fernoptischen Geräts, Koppeln des fernoptischen Geräts mit dem elektronischen Endgerät, Aufnahme eines Bildes mittels dem Bilderfassungskanal, Aufnahme eines Videos mittels dem Bilderfassungskanal.

Durch die Kombination eines Sichtkanals und eines Bilderfassungskanals in nur einem fernoptischen Gerät ist es einer Bedienperson bzw. einem Benutzer möglich, entfernte Objekte ohne optische Einbußen beobachten zu können und bei Wunsch einfach ein digitales Bild, eine Bildsequenz bzw. ein Video vom betrachteten Bildausschnitt aufnehmen zu können. Anstelle von einem fernoptischen Beobachtungsgerät und einem separaten Bilderfassungsgerät werden nun zwei Geräte bzw. Funktionen in dem erfindungsgemäßen fernoptischen Gerät vereint, wobei dieses besonders kompakt ausgeführt ist.

Optional kann dabei ein zweiter Sichtkanal vorgesehen sein, um ein Bild mit zwei Augen betrachten zu können.

Durch eine Anordnung des Sichtkanals und des Bilderfassungskanals übereinander kann das fernoptische Gerät sowohl mit der linken als auch mit der rechten Hand der Bedienperson gleichermaßen gegriffen bzw. bedient werden.

Wird nun ein digitales Bild, eine Bildsequenz bzw. ein Video von einem durch das fernoptische Gerät betrachteten Bildausschnitt aufgenommen, so wird dieses über die Verbindung im Wesentlichen in Echtzeit bzw. mit geringer Latenz an das elektronische Endgerät übertragen. In der Speichereinheit des fernoptischen Geräts müssen Bilder, Bildsequenzen bzw. Videos somit nur kurz zwischengespeichert werden. Die Speichereinheit muss somit nur einen geringen Speicherplatz zur Verfügung stellen. Das erfindungsgemäße fernoptische Gerät kann somit weiterhin einfach und kompakt gestaltet werden.

Alternativ dazu, wenn keine aktive Verbindung mit einem elektronischen Endgerät besteht, können ein digitales Bild, eine Bildsequenz bzw. ein Video auch in der Speichereinheit des fernoptischen Geräts zwischengespeichert werden. Später, sobald wieder eine aktive Verbindung besteht, können ein digitales Bild, eine Bildsequenz bzw. ein Video an das elektronische Endgerät weitergeleitet werden und dort dargestellt, ausgewertet bzw. gespeichert werden. Vorteilhafterweise ist das erfindungsgemäße fernoptische Gerät mit einem elektronischen Endgerät gekoppelt. Die in dem fernoptischen Gerät vorgesehenen elektronischen Komponenten bzw. Bauteile können somit sehr einfach ausfallen, nachdem sämtliche Logik auf dem elektronischen Endgerät vorgesehen ist. Bei dem elektronischen Endgerät kann es sich um ein Smartphone, einen Tabletcomputer, einen tragbaren Computer, einen Desktop PC oder eine Servereinrichtung handeln. Nachdem das fernoptische Gerät nur sehr wenige elektronischen Komponenten bzw. Bauteile umfasst, ist auch der Energieverbrauch vergleichsweise gering. Bei der elektronischen Bedientaste handelt es sich um einen einfachen mechanischen Taster mit einem Betätigungskontakt. Der Betätigungskontakt kann dabei als Schließer-Kontakt ausgeführt sein, wobei bei einer Betätigung der Bedientaste eine Funktion ausgeführt wird. Bei einer Funktion handelt es sich um das Einschalten des fernoptischen Geräts, Ausschalten des fernoptischen Geräts, Koppeln des fernoptischen Geräts mit dem elektronischen Endgerät, Aufnahme eines Bildes mittels dem Bilderfassungskanal, oder Aufnahme eines Videos mittels dem Bilderfassungskanal. Die Funktionen werden dabei jeweils über eine vordefinierte Betätigung der elektronischen Bedientaste abgerufen, beispielsweise durch eine Betätigung über einen bestimmten Zeitraum oder mehrere definierte Betätigungen in Abfolge nacheinander.

In einer nicht näher dargestellten Ausführungsform ist es auch denkbar, dass die elektronische Bedientaste als Knopf, Drehknopf oder als Touch-Bedienfeld ausgeführt ist.

Des Weiteren kann es zweckmäßig sein, wenn eine einzige elektronische Bedientaste zum Ausführen einer Mehrzahl aus der Gruppe von Parametern und Funktionen vorgesehen ist. Mit nur einer einzigen elektronischen Bedientaste wird der Bedienperson eine besonders einfache und intuitive Bedienungsmöglichkeit des fernoptischen Geräts ermöglicht. Durch unterschiedlich lange Betätigungen der Bedientaste können dabei von der Bedienperson verschiedenste Parameter und Funktionen abgerufen bzw. ausgeführt werden. Alternativ kann eine Abfolge von definierten Betätigungen vorgesehen sein, um bestimmte Parameter abzurufen oder eine Funktion auszuführen.

Weiterhin wird mit nur einer einzigen elektronische Bedientaste eine kompakte und kostengünstige Bauweise des erfindungsgemäßen fernoptischen Geräts ermöglicht, nachdem mechanische und elektronische Komponenten nur für eine Bedientaste vorgesehen werden müssen. Ferner kann vorgesehen sein, dass die Bedientaste im Wesentlichen ellipsenförmig und/oder symmetrisch zur Gehäusemittelachse ausgeführt ist. Die Bedientaste kann somit eine ergonomisch dahingehend geformt sein, dass diese einfach von der Bedienperson betätigt werden kann.

Darüber hinaus kann vorgesehen sein, dass die Bedientaste im Wesentlichen flächenbündig mit einer Oberfläche eines Gehäuses des fernoptischen Geräts ausgeführt ist. Damit kann das Gehäuse kompakt und ergonomisch geformt ausgeführt werden.

Vorteilhaft ist auch eine Ausprägung, gemäß welcher vorgesehen sein kann, dass die Bedientaste eine Vertiefung aufweist, wobei die Vertiefung als Orientierungshilfe für zumindest einen Finger einer Hand einer Bedienperson ausgebildet ist.

Der Bedienperson wird damit ein schnelles und einfaches Auffinden der Bedientaste, bei gleichzeitiger Beobachtung eines Objekts bzw. eines Bildausschnitts durch das fernoptische Gerät ermöglicht.

Gemäß einer Weiterbildung ist es möglich, dass auf dem Gehäuse eine Anzeigeeinheit angeordnet ist, mittels welcher der Abruf eines Parameters und/oder die Ausführung einer Funktion visualisierbar ist.

Die Bedienperson kann damit unmittelbar eine visuelle Rückmeldung bekommen ob und welcher Parameter abgerufen wird und ob und welche Funktion ausgeführt wird. Weiters ist hierbei eine visuelle Rückmeldung denkbar, welche die fehlerhafte Ausführung oder den Abbruch einer Funktion signalisiert.

Ferner kann es zweckmäßig sein, wenn die Anzeigeeinheit zumindest eine farblich veränderliche Beleuchtungseinheit umfasst.

Damit kann eine unterschiedliche Visualisierung unterschiedlicher Parameter bzw. Funktionen erreicht werden. Für die Bedienperson ist es somit einfach zu unterscheiden, welcher Parameter abgerufen bzw. welche Funktion ausgeführt wird. Auch ist eine Visualisierung mittels der Beleuchtungseinheit bei Dunkelheit möglich. Die Beleuchtungseinheit kann dabei eine oder mehrere LEDs umfassen, welche eine energiesparende Beleuchtung ermöglichen.

Darüber hinaus kann vorgesehen sein, dass auf dem Gehäuse zumindest ein beleuchtbares Anzeigesegment vorgesehen ist, mittels welchem ein Ladezustand eines Energiespeichers des fernoptischen Geräts darstellbar ist.

Vorteilhafterweise können mittels der Beleuchtung einzelner bzw. unterschiedlicher Anzeigesegmente der Anzeigeeinheit mehrere unterschiedliche Visualisierungs- und Signalisierungsmöglichkeiten geschafften werden, wobei unterschiedliche Parameter bzw. Funktionen jeweils unterschiedlich dargestellt werden können. Die Anzeigeeinheit kann somit besonders kompakt und übersichtlich ausgestaltet sein.

Des Weiteren kann vorgesehen sein, dass eine akustische Ausgabeeinheit vorgesehen ist, mittels welcher der Abruf eines Parameters und/oder die Ausführung einer Funktion signalisierbar ist.

Zusätzlich zur optischen Signalisierung kann es vorteilhalft sein, auch eine akustische Signalisierung vorzusehen. Beobachtet die Bedienperson gerade ein Objekt durch das fernoptische Gerät oder nimmt ein Bild, eine Bildsequenz oder ein Video auf, oder es erfolgt eine Objektklassifizierung zusammen mit einem externen Gerät. So kann mittels der akustischen Ausgabeeinheit eine einfache Signalisierung, beispielsweise des Starts einer Bildaufnahme oder der Abschluss einer Klassifizierung erfolgen. Die Bedienperson muss hierbei also nicht den Blick von einer durch den Sichtkanal betrachteten Szene nehmen.

Gemäß einer besonderen Ausprägung ist es möglich, dass die Bedientaste als eine Augenmuschel ausgebildet ist, wobei die Augenmuschel okularseitig an dem Sichtkanal angeordnet ist. Um weiterhin ein kompaktes und einfaches fernoptisches Gerät zur Verfügung zu stellen, kann die Augenmuschel als Bedientaste ausgebildet sein. Bei einem Druck auf die Augenmuschel kann der Betätigungskontakt zum Ausführen einer Funktion betätigt werden. Ein Umgreifen der Bedienperson auf eine separat angeordnete Bedientaste im Zuge einer Beobachtung einer Szene bzw. eines Objekts kann hierbei entfallen, wobei der Bedienkomfort weiter gesteigert wird.

Es kann auch vorteilhaft sein, über ein integriertes Mikrofon das fernoptische Gerät mittels Sprachbefehle zu steuern (akustische Eingabeeinrichtung) oder eine Vogelerkennung durch Aufnahme und nachträgliche Analyse des Vogelgesanges zu unterstützen.

Entsprechend einer vorteilhaften Weiterbildung kann vorgesehen sein, dass die Verbindung als Drahtlosverbindung ausgebildet ist.

Die Drahtlosverbindung kann hierbei als WLAN, Bluetooth oder NFC Verbindung ausgebildet sein. Somit entfällt ein etwaiger Verkabelungsaufwand des fernoptischen Geräts mit einem mobilen Endgerät, wodurch der Bedienkomfort für die Bedienperson weiter gesteigert werden kann.

Insbesondere kann es vorteilhaft sein, wenn das elektronische Endgerät als Smartphone ausgebildet ist, welches mittels der Drahtlosverbindung mit dem fernoptischen Gerät koppelbar ist.

Mittels dem standardmäßig an Smartphones vorgesehenen Bildschirmen können aufgenommene Bilder, Bildsequenzen und/oder Videos einfach betrachtet werden. Zur Übertragung der Bilder, Bildsequenzen und/oder Videos können weiterhin die standardmäßig in Smartphones vorgesehenen Technologien zur Herstellung einer Drahtlosverbindung verwendet werden. Zusätzliche Hardware, neben dem fernoptischen Gerät und dem Smartphone ist somit nicht notwendig, was weiterhin eine kompakte Ausgestaltung des Gesamtsystems ermöglicht.

Ferner ist vorgesehen, dass die Bedientaste eine erste Messvorrichtung zur Ermittlung einer Betätigungsdauer umfasst, wobei bei einer ersten Betätigungsdauer eine erste Funktion ausführbar ist und bei einer zweiten, von der ersten Betätigungsdauer unterschiedlichen Betätigungsdauer eine zweite, von der ersten Funktion unterschiedliche Funktion ausführbar ist.

Hierbei wird die Zeit gemessen, während welcher ein Betätigungskontakt für die Bedientaste geschlossen ist.

Darüber hinaus ist vorgesehen, dass die Bedientaste eine zweite Messvorrichtung zur Ermittlung eines Zeitintervalls zwischen aufeinander folgenden Betätigungen der Bedientaste umfasst, wobei bei einem ersten Zeitintervall zwischen einer ersten Betätigung und einer zweiten Betätigung eine erste Funktion ausführbar ist und bei einem zweiten Zeitintervall zwischen einer dritten Betätigung und einer vierten Betätigung eine zweite, von der ersten Funktion unterschiedliche Funktion ausführbar ist.

Zwischen den einzelnen Betätigungen ist die Bedientaste betätigungslos was bedeutet, dass der Betätigungskontakt geöffnet ist.

Weiterhin ist vorgesehen, dass die Bedientaste eine dritte Messvorrichtung zur Ermittlung einer Betätigungskraft umfasst, wobei bei einer ersten Betätigungskraft eine erste Funktion ausführbar ist und bei einer zweiten, von der ersten Betätigungskraft unterschiedlichen Betätigungskraft eine zweite, von der ersten Funktion unterschiedliche Funktion ausführbar ist.

Bei der dritten Messvorrichtung handelt es sich dabei um einen Kraftaufnehmer bzw. Kraftsensor, mittels welchem die Betätigungskraft gemessen wird.

Gemäß einer Weiterbildung ist es möglich, dass die erste Messvorrichtung und/oder die zweite Messvorrichtung und/oder die dritte Messvorrichtung mit der Prozessoreinheit gekoppelt sind, wobei auf Basis der ermittelten Betätigungsdauer, des ermittelten Zeitintervalls und/oder der ermittelten Betätigungskraft Parameter abrufbar und/oder die Funktionen ausführbar sind.

Ferner kann es zweckmäßig sein, wenn eine Trägereinheit ausgebildet ist, in welcher Trägereinheit zumindest ein erstes Gehäuse des Sichtkanals, ein zweites Gehäuse des Bilderfassungskanals, die Verstellmechanik, das Schnittstellenmodul und die Prozessoreinheit angeordnet sind.

Vorteilhafterweise werden im Zuge der Montage optische, mechanische und elektronische Bauteile auf der Trägereinheit vormoniert und dann im Zuge der Endmontage einfach das Gehäuse eingeschoben bzw. mit einzelnen Gehäuseteilen zusammengeschoben.

Darüber hinaus kann vorgesehen sein, dass zwischen der Trägereinheit und der Prozessoreinheit eine erste Wärmeableitvorrichtung ausgebildet ist und/oder dass zwischen der Trägereinheit und dem ersten Gehäuse des Sichtkanals eine zweite Wärmeableitvorrichtung ausgebildet ist und/oder dass zwischen dem Gehäuse des fernoptischen Geräts und dem Kameramodul eine dritte Wärmeableitvorrichtung ausgebildet ist.

Bei einem länger andauernden Betrieb des fernoptischen Geräts kann es zu einer erhöhten Wärmeabgabe der Prozessoreinheit oder der Bilderfassungseinrichtung kommen. Zur Wärmeableitung sind vorteilhafterweise mehrere Wärmeableitvorrichtungen zur Ableitung der Wärme an die Trägereinheit bzw. das Gehäuse vorgesehen. Zur verbesserten Wärmeableitung können die Trägereinheit aus Aluminium und die Wärmeableitvorrichtungen aus Kupfer hergestellt sein.

Die Erfindung betrifft ferner ein Beobachtungs- und Bilderfassungssystem umfassend ein fernoptisches Gerät und ein elektronisches Endgerät, wobei das fernoptische Gerät und das elektronische Endgerät über eine Verbindung zumindest zeitweise miteinander gekoppelt sind.

Gemäß einer besonderen Ausprägung ist es möglich, dass das elektronische Endgerät eine Anzeigevorrichtung umfasst, auf welcher Anzeigevorrichtung ein mittels einem Kameramodul des fernoptischen Geräts aufgenommenes Bild und/oder eine Bildsequenz anzeigbar ist.

Entsprechend einer vorteilhaften Weiterbildung kann vorgesehen sein, dass das elektronische Endgerät einen GPS-Empfänger umfasst, wobei der Standort des fernoptischen Geräts bestimmbar ist.

Somit können weiterhin Standardkomponenten bzw. Standardfunktionalitäten des elektronischen Endgeräts verwendet werden. Das fernoptische Gerät kann dabei einfach, kompakt und kostengünstig hergestellt bzw. ausgeführt sein.

Zu Herstellung einer Verbindung wie einer WLAN, Bluetooth oder NFC Verbindung müssen sich ein fernoptisches Gerät und ein elektronisches Endgerät in einer gewissen räumlichen Nähe zueinander befinden, wodurch der Standort des elektronischen Endgeräts relativ genau bestimmt werden kann.

Mittels eines in das fernoptische Gerät integrierten Kompasses kann es vorteilhaft sein, die horizontale Ausrichtung des Gerätes zum magnetischen Nordpol zu bestimmen. Der Kompass kann auch dazu verwendet werden, eine Beobachtungsphase auf ein entferntes und sich nicht bewegendes Objekt (Gerät befindet sich in Ruhe) zu erkennen.

Insbesondere kann es vorteilhaft sein, wenn eine Anwendungssoftware in einer Servereinrichtung installiert ist, auf welche Anwendungssoftware mittels dem elektronischen Endgerät zugreifbar ist und/oder welche Anwendungssoftware mittels dem elektronischen Endgerät ausführbar ist.

Die Anwendungssoftware kann dabei auch als mobile Applikation ausgeführt sein und direkt auf dem mobilen Endgerät installiert sein. Die Servereinrichtung kann hierbei auch in dem mobilen Endgerät vorgesehen sein. Vorteilhaft hierbei ist weiterhin, dass das Beobachtungs- und Bilderfassungssystem besonders kompakt ausgeführt sein kann.

Ferner kann vorgesehen sein, dass die Servereinrichtung ein Speichersystem umfasst, in welchem ein mittels dem Kameramodul des fernoptischen Geräts aufgenommenes Bild und/oder eine Bildsequenz speicherbar ist.

Somit kann auf dem fernoptischen Gerät direkt ein nur geringer Speicherplatz vorgesehen sein, indem ein externes Speichersystem zum Speichen, Ablegen, Analysieren und/oder Klassifizieren von Bildern, Bildsequenzen oder Videos verwendet wird. Bei dem Speichersystem kann es sich auch um ein Speichersystem handeln, welches direkt in dem elektronischen Endgerät vorgesehen ist.

Darüber hinaus kann vorgesehen sein, dass Parameter und/oder Funktionen mittels der Anwendungssoftware auf dem elektronischen Endgerät erstellbar und/oder editierbar sind, wobei Parameter und/oder Funktionen über die Verbindung von dem elektronischen Endgerät an das fernoptische Gerät übertragbar sind und vice versa.

Hierbei können Parameter und/oder Funktionen einfach mittels dem Benutzerinterface des mobilen Endgeräts erstellt oder editiert werden und zurück an das fernoptische Gerät übertragen werden. Das fernoptische Gerät selber kann hierbei weiterhin einfach, in Hinblick auf die elektronischen Komponenten und Bauteile ausgeführt sein und eine kompakte Bauweise aufweisen.

Vorteilhaft ist auch eine Ausprägung, gemäß welcher vorgesehen sein kann, dass das elektronische Endgerät als Smartphone ausgebildet ist.

Das fernoptische Gerät ermöglicht das Abrufen von Parametern und/oder Ausführen von Funktionen mit einem Beobachtungs- und Bilderfassungssystem, wobei das Ausführen einer Funktion durch Betätigung der elektronischen Bedientaste des fernoptischen Geräts erfolgt.

Der Abruf von Parametern bzw. das Ausführen von Funktionen kann durch die Bedienperson hierbei möglichst einfach und intuitiv erfolgen.

Ferner kann es zweckmäßig sein, wenn durch eine vorbestimmte Betätigung einer einzigen elektronischen Bedientaste des fernoptischen Geräts die Auswahl einer Mehrzahl aus der Gruppe von Parametern und Funktionen erfolgt.

Durch unterschiedlich lange Betätigungen der Bedientaste können dabei von der Bedienperson verschiedenste Parameter und Funktionen abgerufen bzw. ausgeführt werden.

Darüber hinaus kann vorgesehen sein, dass die Betriebsbereitschaft des fernoptischen Geräts mittels einer Beleuchtung einer Anzeigeeinheit des fernoptischen Geräts mit einer ersten Farbe signalisiert wird.

Die Bedienperson bekommt hierbei vorteilhafterweise unmittelbar eine Rückmeldung, dass das fernoptische Gerät eingeschaltet ist und dazu bereit ein Bild, eine Bildsequenz bzw. ein Video aufzunehmen.

Weiters kann vorgesehen sein, dass aufgrund einer ermittelten Betätigungsdauer und/oder eines ermittelten Zeitintervalls und/oder einer ermittelten Betätigungskraft die Auswahl einer Mehrzahl aus der Gruppe von Parametern und Funktionen erfolgt.

Für unterschiedliche Funktionen sind hierbei unterschiedliche Betätigungsdauern, Zeitintervalle und/oder Betätigungskräfte hinterlegt. Mit nur einer Bedientaste ist somit eine einfache und intuitive Bedienung für die Bedienperson möglich.

Des Weiteren kann es zweckmäßig sein, wenn bei einer ersten ermittelten Betätigungsdauer ein Kopplungsvorgang des fernoptischen Geräts mit einem elektronischen Endgerät durchgeführt wird.

In dem fernoptischen Gerät ist dazu ein Schnittstellenmodul vorgesehen, mittels welchem eine WLAN, Bluetooth oder NFC Verbindung mit dem elektronischen Endgerät hergestellt werden kann. In dem elektronischen Endgerät werden hierzu die vorgesehenen Standardschnittstellen verwendet.

Ferner kann vorgesehen sein, der Kopplungsvorgang mittels einer Beleuchtung der Anzeigeeinheit mit einer zweiten Farbe visualisiert wird, wobei die Beleuchtung der Anzeigeeinheit mit der zweiten Farbe während dem Kopplungsvorgang blinkend erfolgt und die Beleuchtung der Anzeigeeinheit mit der zweiten Farbe nach dem erfolgreichen Kopplungsvorgang für eine vordefinierte Zeitdauer durchgehend erfolgt.

Die Bedienperson bekommt hierbei unmittelbar eine Rückmeldung wie der Status des Kopplungsvorgangs ist und ob dieser erfolgreich abgeschlossen wurde.

Darüber hinaus kann vorgesehen sein, dass ein fehlgeschlagener Kopplungsvorgang mittels einer Beleuchtung der Anzeigeeinheit mit einer dritten Farbe signalisiert wird.

Vorteilhaft ist auch eine Ausprägung, gemäß welcher vorgesehen sein kann, dass ein Ladezustand eines Energiespeichers des fernoptischen Geräts mittels einer Beleuchtung der Anzeigeeinheit mit einer vierten Farbe visualisiert wird.

Die Bedienperson kann hierbei laufend über den Ladezustand des Energiespeichers informiert werden und einen Ladevorgang rechtzeitig einleiten, wenn beispielsweise ein längerer Einsatz des fernoptischen Geräts geplant ist.

Gemäß einer Weiterbildung ist es möglich, dass der Ladezustand des Energiespeichers mittels zumindest einem beleuchtbaren Anzeigesegment visualisiert wird.

Vorteilhafterweise ist der Ladezustand des Energiespeichers auch bei Dunkelheit gut ersichtlich bzw. visualisierbar.

Ferner kann es zweckmäßig sein, wenn der Ladezustand des Energiespeichers mittels einer kombinierten Beleuchtung der Anzeigeeinheit und zumindest einem Anzeigesegment visualisiert wird.

Darüber hinaus kann vorgesehen sein, dass die Betriebsbereitschaft des fernoptischen Geräts mittels einer akustischen Ausgabeeinheit signalisiert wird.

Zusätzlich zur optischen Signalisierung kann es vorteilhalft sein, auch eine akustische Signalisierung vorzusehen. Beobachtet die Bedienperson gerade ein Objekt durch das fernoptische Gerät oder nimmt ein Bild, eine Bildsequenz oder ein Video auf, so kann mittels der akustischen Ausgabeeinheit eine einfache Signalisierung, beispielsweise des Starts einer Bildaufnahme, erfolgen. Die Bedienperson muss hierbei also nicht den Blick von einer durch den Sichtkanal betrachteten Szene nehmen. Eine Vereinfachung der Bedienung kann weiterhin auch durch eine akustische Eingabeeinheit über ein integriertes Mikrofon erfolgen.

Des Weiteren kann vorgesehen sein, dass eine Drahtlosverbindung des fernoptischen Geräts mit einem elektronischen Endgerät aufgebaut wird, wobei Parameter und/oder Funktionen von dem elektronischen Endgerät an das fernoptische Gerät übertragen werden und vice versa.

Gemäß einer besonderen Ausprägung ist es möglich, dass Parameter und/oder Funktionen von einem elektronischen Endgerät an eine Mehrzahl von fernoptischen Geräten übertragen werden und vice versa.

Einer Mehrzahl von Bedienpersonen können hierbei die gleichen Parameter und Funktionen bereitgestellt werden.

Es ist vorgesehen, dass Funktionen ausgewählt aus der Gruppe bestehend aus Einschalten des fernoptischen Geräts, Ausschalten des fernoptischen Geräts, Koppeln des fernoptischen Geräts mit dem elektronischen Endgerät, Aufnahme eines Bildes mittels dem Bilderfassungskanal, Aufnahme eines Videos mittels dem Bilderfassungskanal durch Betätigung der Bedientaste ausgeführt werden.

Insbesondere kann es vorteilhaft sein, wenn die Auswahl einer Mehrzahl aus der Gruppe von Parametern und Funktionen unmittelbar nacheinander erfolgt.

Ferner kann vorgesehen sein, dass der Programmablauf einer Mehrzahl von ausgewählten Funktionen weitgehend parallel erfolgt. Vorteilhafterweise kann hiermit die Geschwindigkeit der einzelnen Programmabläufe gesteigert werden.

Darüber hinaus kann vorgesehen sein, dass der Programmablauf einer Mehrzahl von ausgewählten Funktionen zeitversetzt erfolgt.

Vorteilhaft ist auch eine Ausprägung, gemäß welcher vorgesehen sein kann, dass der Programmablauf mittels einer Anwendungssoftware des gekoppelten elektronischen Endgeräts erfolgt.

Vorteilhafterweise erfolgt der Ablauf der gesamten Programmlogik auf dem elektronischen Endgerät, wodurch das fernoptische Gerät möglichst einfach und kompakt ausgeführt werden kann.

Gemäß einer Weiterbildung ist es möglich, dass Parameter und/oder Funktionen mittels der Anwendungssoftware auf dem elektronischen Endgerät erstellt und/oder editiert werden, wobei Parameter und/oder Funktionen über die Drahtlosverbindung von dem elektronischen Endgerät an das fernoptische Gerät übertragen werden und vice versa.

Ferner kann es zweckmäßig sein, wenn durch eine vordefinierte Betätigung der Bedientaste ein Bild und/oder eine Bildsequenz aufgenommen wird, welche auf einer Anzeigevorrichtung des elektronischen Endgeräts dargestellt werden.

Das fernoptische Gerät kann dadurch weiterhin einfach und kompakt ausgeführt werden und zur Bilddarstellung die Standardkomponenten des elektronischen Endgeräts verwendet werden.

Gemäß einer besonderen Ausprägung ist es möglich, dass bei der vordefinierten Betätigung der Bedientaste bei Beginn der Aufnahme des Bildes und/oder der Bildsequenz ein akustisches Signal mittels der akustischen Ausgabeeinheit ausgegeben wird.

Die Bedienperson kann damit unmittelbar eine Rückmeldung erhalten, dass die Aufnahme gestartet wurde, ohne den Blick von einem betrachteten Objekt bzw. einen betrachteten Bildausschnitt zu wenden.

Darüber hinaus kann vorgesehen sein, dass ein aufgenommenes Bild und/oder eine aufgenommene Bildsequenz auf einem Speichersystem einer Servereinrichtung gespeichert werden.

Die Servereinrichtung kann dabei über eine Drahtlosverbindung direkt mit dem fernoptischen Gerät, oder aber mit dem elektronischen Endgerät gekoppelt sein. Das fernoptische Gerät muss somit nur eine geringe integrierte Speicherkapazität aufweisen und kann weiterhin kompakt und einfach ausgeführt werden.

Des Weiteren kann vorgesehen sein, dass mittels einem GPS-Empfänger des elektronischen Endgeräts der Standort des fernoptischen Geräts ermittelt wird.

Vorteilhaft ist auch wenn in dem Sichtkanal ein erster Strahlengang durch ein erstes Objektiv, eine erste Fokussierlinse, ein Umkehrsystem und ein erstes Okular ausgebildet ist, und wenn in dem Bilderfassungskanal ein zweiter Strahlengang durch ein zweites Objektiv, eine zweite Fokussierlinse und ein zweites Okular ausgebildet ist, wobei die erste Fokussierlinse und die zweite Fokussierlinse mittels einer ersten Fokussiereinrichtung gemeinsam verschiebbar sind, und wobei in dem ersten Strahlengang des Sichtkanals durch eine Strichplatte oder durch ein von einer Projektionsoptik abgebildetes Bild eine Referenz-Bildebene bestimmt ist, und wobei das erste Okular des Sichtkanals mittels einer zweiten Fokussiereinrichtung zur Fokussierung auf die Referenz-Bildebene verschiebbar ist.

In vorteilhafter Weise umfasst bei dem fernoptischen Gerät die erste Fokussiereinrichtung einen Fokussierring und eine mit dem Fokussierring gekoppelte Verstellmechanik zur Verschiebung der ersten Fokussierlinse und der zweiten Fokussierlinse parallel zu optischen Achsen des ersten und des zweiten Strahlengangs.

Weiteres ist vorgesehen, dass die zweite Fokussiereinrichtung einen Dioptriering zur Verschiebung der Okularlinsen parallel zur optischen Achse des ersten Strahlengangs umfasst.

Gemäß einer Weiterbildung des fernoptischen Geräts umfasst das Kameramodul eine dritte Fokussiereinrichtung.

Von Vorteil ist auch, dass das Kameramodul einen elektronischen Bilderfassungssensor umfasst und die dritte Fokussiereinrichtung eine Autofokuseinrichtung umfasst. Damit kann eine Scharfstellung auf dem Bildsensor der Kamera mit gleichbleibend hoher Qualität erreicht werden, wie sie alleine auf Grundlage der subjektiven Beurteilung der von einer Bedienperson empfundenen Bildschärfe nicht möglich wäre.

Weiters kann es zweckmäßig sein, dass der zweite Strahlengang des Bilderfassungskanals ein afokales Linsensystem umfasst.

Die Ausbildung des fernoptischen Geräts, wonach die erste Fokussierlinse des Sichtkanals auf einer dem ersten Okular abgewandten Seite der Referenz-Bildebene angeordnet ist, hat den Vorteil, dass dadurch das Fokussieren der Okularlinsen auf die Strichplatte und das Fokussieren des Bildes des entfernten Gegenstands auf die Referenz-Bildebene unabhängig voneinander durchführbar sind.

Durch die Weiterbildung, wobei das Fernoptische Gerät mit zwei Sichtkanälen ausgebildet ist, ist einer Bedienperson ein komfortables Beobachten mit beiden Augen möglich.

Mit einem fernoptischen Gerät, in einer der Ausbildungen wie vorstehend angegeben, kann in der Weise verfahren werden, dass eine Bedienperson beim Blick durch den Sichtkanal das erste Okular des Sichtkanals mittels der zweiten Fokussiereinrichtung auf die Referenz-Bildebene subjektiv scharf einstellt, und anschließend beim Anvisieren des entfernten Gegenstands ein Bild des entfernten Gegenstands mittels der ersten Fokussiereinrichtung scharf einstellt, woraufhin anschließend mittels der dritten Fokussiereinrichtung des Kameramoduls ein Bild des entfernten Gegenstands in dem Bilderfassungskanal automatisch scharf eingestellt wird.

Von Vorteil ist die Verfahrensweise, wobei von einer Prozessoreinheit ein Beenden einer Bewegung der Fokussierlinse festgestellt wird und daran anschließend von der Prozessoreinheit das Fokussieren des Bildes des entfernten Gegenstands in dem Bilderfassungskanal automatisch ausgelöst wird.

Eine alternative Maßnahme sieht vor, dass beim Betätigen einer elektronischen Bedientaste durch die Bedienperson das Fokussieren des Bildes des entfernten Gegenstands in dem Bilderfassungskanal ausgelöst wird.

Günstig erweist sich auch, wenn bei dem Verfahren eine Drahtlosverbindung des fernoptischen Geräts mit einem elektronischen Endgerät aufgebaut wird und das Bild des entfernten Gegenstands von dem elektronischen Endgerät auf einer Anzeigevorrichtung angezeigt wird, und wenn die Bedienperson an dem elektronischen Endgerät einen Bildausschnitt des Bildes des entfernten Gegenstands auswählt, dass dann die Autofokusfunktion des Kameramoduls automatisch zur Fokussierung auf den ausgewählten Bildausschnitt angesteuert wird. Dies hat den Vorteil, dass damit an dem elektronischen Endgerät Scharfstellungen auf unterschiedliche Details bzw. unterschiedlich weit entfernte Gegenstände der dargestellten Szenerie bewirkt werden können, ohne dass manuelle Betätigungen zum Scharfstellen an dem fernoptischen Gerät selbst vorgenommen werden müssen.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines fernoptischen Geräts;
- Fig. 2: eine Seitenansicht des fernoptischen Geräts;
- Fig. 3: eine okularseitige Ansicht des fernoptischen Geräts;
- Fig. 4: eine Unterseite des fernoptischen Geräts;
- Fig. 5: ein Beobachtungs- und Bilderfassungssystem;
- Fig. 6: eine erste perspektivische Ansicht einer Trägereinheit des fernoptischen Geräts;
- Fig. 7: eine objektivseitige Ansicht der Trägereinheit des fernoptischen Geräts;
- Fig. 8: eine zweite perspektivische Ansicht der Trägereinheit des fernoptischen Geräts;
- Fig. 9: den Trägerrahmen der Trägereinheit des fernoptischen Geräts perspektivisch dargestellt;
- Fig. 10: eine Draufsicht auf die Trägereinheit, mit den optischen Bauteilen dargestellt;
- Fig. 11: einen Querschnitt der beiden optischen Systeme des Sichtkanals und des Bilderfassungskanals;
- Fig. 12: ein weiteres Ausführungsbeispiel des fernoptischen Geräts.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

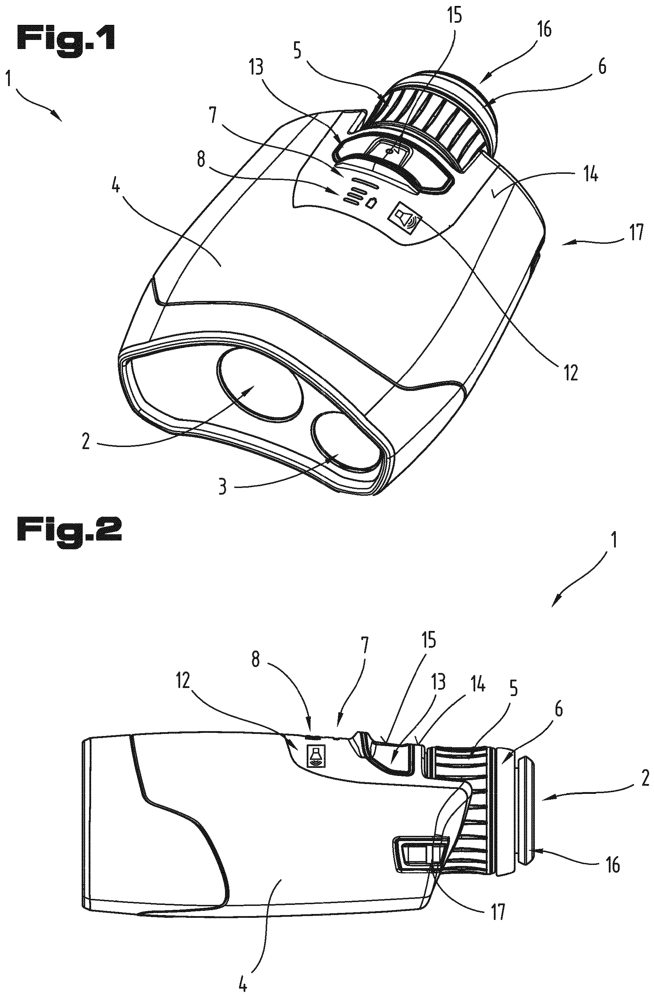

Fig. 1 zeigt eine perspektivische Ansicht eines fernoptischen Geräts 1. Das fernoptische Gerät 1 umfasst einen Sichtkanal 2 und einen Bilderfassungskanal 3, welche in einem Gehäuse 4 aufgenommen sind. Das fernoptische Gerät 1 umfasst ferner einen Fokussierring 5 zur Fokussierung eines durch das fernoptische Gerät 1 betrachteten Bildes bzw. Bildausschnitts, einen Dioptriering 6 zur Einstellung eines Dioptrieausgleichs, eine Anzeigeeinheit 7 und mehrere beleuchtbare Anzeigesegmente 8 zur Darstellung eines Ladezustands eines Energiespeichers 9 des fernoptischen Geräts 1. Mittels einer farblich veränderlichen Beleuchtungseinheit 10 ist die Anzeigeeinheit 7 in unterschiedlichen Farben beleuchtbar, wobei unterschiedliche Betriebszustände des fernoptischen Geräts 1 bzw. der Abruf eines Parameters und/oder die Ausführung einer Funktion visualisierbar sind.

Beispielsweise wird die Betriebsbereitschaft bzw. das Einschalten des fernoptischen Geräts 1 mittels einer Beleuchtung der Anzeigeeinheit 7 mit einer ersten Farbe signalisiert. Hierbei kann aufgrund einer ermittelten Betätigungsdauer und/oder eines ermittelten Zeitintervalls und/oder einer ermittelten Betätigungskraft die Auswahl einer Mehrzahl aus der Gruppe von Parametern und Funktionen erfolgen.

Zum Beispiel kann bei einer ersten ermittelten Betätigungsdauer ein Kopplungsvorgang des fernoptischen Geräts 1 mit einem elektronischen Endgerät 11 durchgeführt werden. Der Kopplungsvorgang kann hierbei mittels einer Beleuchtung der Anzeigeeinheit 7 mit einer zweiten Farbe visualisiert werden, wobei die Beleuchtung der Anzeigeeinheit 7 mit der zweiten Farbe während dem Kopplungsvorgang blinkend erfolgt und die Beleuchtung der Anzeigeeinheit 7 mit der zweiten Farbe nach dem erfolgreichen Kopplungsvorgang für eine vordefinierte Zeitdauer durchgehend erfolgt. Ferner kann ein fehlgeschlagener Kopplungsvorgang mittels einer Beleuchtung der Anzeigeeinheit 7 mit einer dritten Farbe signalisiert werden.

Alternativ oder zusätzlich zur Darstellung des Ladezustands des Energiespeichers 9 mittels der beleuchtbaren Anzeigesegmente 8, kann der Ladezustand des Energiespeichers 9 auch mittels einer Beleuchtung der Anzeigeeinheit 7 mit einer vierten Farbe visualisiert werden.

Weiters ist eine akustische Ausgabeeinheit 12 an dem fernoptischen Gerät 1 vorgesehen, mittels welcher der Abruf eines Parameters und/oder die Ausführung einer Funktion ebenfalls signalisierbar sind. Beispielsweise kann über die Ausgabeeinheit 12 ein erster Signalton nach dem erfolgten Einschalten des fernoptischen Geräts 1 ausgegeben werden. Weiters ist es denkbar, dass ein zweiter Signalton ausgegeben wird, wenn ein Kopplungsvorgang mit einem elektronischen Endgerät 11 erfolgreich war bzw. ein dritter Signalton, wenn ein Kopplungsvorgang mit einem elektronischen Endgerät 11 nicht erfolgreich war.

Zum Ausführen einer Mehrzahl aus der Gruppe von Parametern und Funktionen ist eine elektronische Bedientaste 13 vorgesehen. In dem dargestellten Ausführungsbeispiel ist die Bedientaste 13 im Wesentlichen ellipsenförmig ausgeführt, wobei als Form für die Bedientaste jegliche geometrische Form wie rund, rechteckig, usw. denkbar ist.

In der Fig. 2 ist eine weitere und gegebenenfalls für sich eigenständige Ausführungsform des fernoptischen Geräts 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in den vorangegangenen Fig. 1 hingewiesen bzw. Bezug genommen.

Die Fig. 2 zeigt dabei eine Seitenansicht des fernoptischen Geräts 1, wobei die Bedientaste 13 im Wesentlichen flächenbündig mit einer Oberfläche 14 des Gehäuses 4 des fernoptischen Geräts 1 ausgeführt ist. Die Bedientaste 13 weist ferner eine Vertiefung 15 auf, wobei die Vertiefung 15 als Orientierungshilfe für zumindest einen Finger einer Hand einer Bedienperson ausgebildet ist.

Ferner umfasst das fernoptische Gerät 1 an der Okularseite des Sichtkanals 2 eine Augenmuschel 16, durch welche die Bedienperson des fernoptische Geräts 1 ein Bild bzw. einen Bildausschnitt betrachten kann. Hierbei ist es gemäß einem nicht näher dargestellten Ausführungsbeispiel denkbar, dass die Bedientaste 13 als die Augenmuschel 16 ausgebildet wird, wobei mit der Augenmuschel 16 eine Mehrzahl aus der Gruppe von Parametern und Funktionen ausführbar ist.

Die Augenmuschel 16 ist dabei entlang der Mittelachse des Sichtkanals 2 in Längsrichtung verstellbar ausgeführt, um individuell auf eine Bedienperson, bei welcher es sich um einen Brillenträger handeln kann, eingestellt werden zu können.

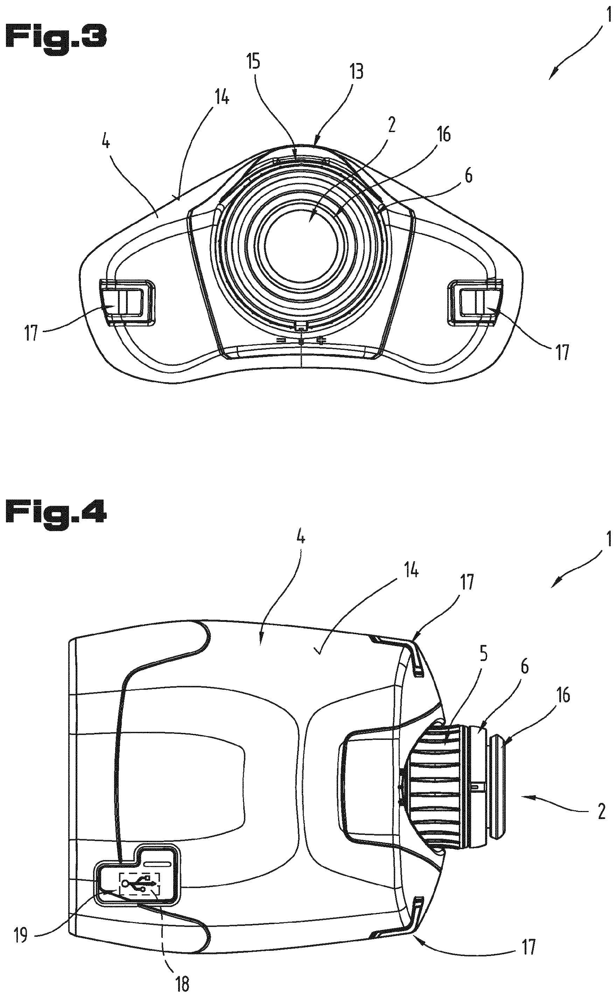

In der Fig. 3 ist eine weitere und gegebenenfalls für sich eigenständige Ausführungsform des fernoptische Geräts 1 gezeigt, wobei wiederum für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Fig. 3 zeigt dabei eine okularseitige Ansicht des fernoptischen Geräts 1, wobei zur Aufnahme eines nicht näher dargestellten Tragriemens Zylinderstifte 17 vorgesehen sind.

In der Fig. 4 ist eine weitere und gegebenenfalls für sich eigenständige Ausführungsform des fernoptische Geräts 1 gezeigt, wobei wiederum für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Fig. 4 zeigt eine Unterseite des fernoptischen Geräts 1, wobei eine Buchse 18 für einen nicht näher dargestellten Stecker eines Verbindungs- bzw. Ladekabels mit einem Deckel 19 verschlossen ist. Nach dem Entfernen bzw. Aufklappen des Deckels kann der Stecker eines Verbindungs- bzw. Ladekabels eingesteckt werden, worauf eine Verbindung mit einem elektronischen Endgerät 11 hergestellt werden kann bzw. ein Lagevorgang des Energiespeichers 9 starten kann.

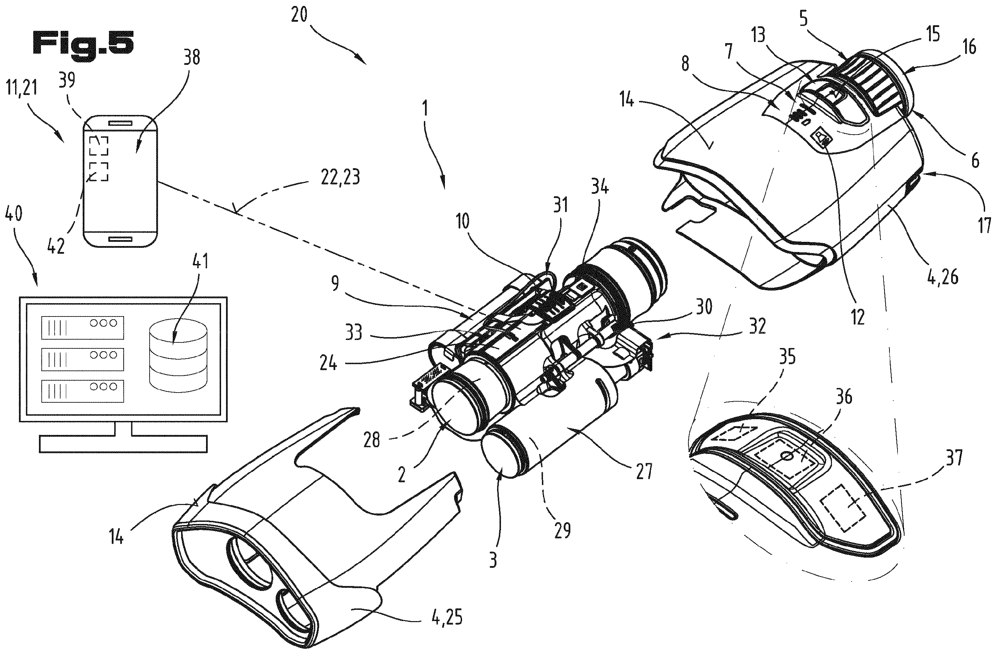

In der Fig. 5 ist eine weitere und gegebenenfalls für sich eigenständige Ausführungsform eines Beobachtungs- und Bilderfassungssystems 20 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Das in der Fig. 5 dargestellte Beobachtungs- und Bilderfassungssystem 20 umfasst ein fernoptisches Gerät 1 und ein elektronisches Endgerät 11 in Form eines Smartphones 21. Das Smartphone 21 ist über eine Verbindung 22 in Form einer Drahtlosverbindung 23 mit dem fernoptischen Gerät 1 gekoppelt. Bei der Drahtlosverbindung 23 kann es sich beispielsweise um eine Bluetooth, WLAN oder eine NFC Verbindung handeln. Zum Umsetzen einer Verbindung 22 bzw. einer Drahtlosverbindung 23 mit einem elektronisches Endgerät 11 bzw. einem Smartphone 21, umfasst das fernoptische Gerät 1 ein Schnittstellenmodul 24. Das Schnittstellenmodul 24 kann dabei eine nicht näher dargestellte WLAN Antenne umfassen.

Das fernoptische Gerät 1 ist in der Fig. 5 in einer Explosionsansicht mit einem ersten Gehäuseteil 25, einem zweiten Gehäuseteil 26 und einer Trägereinheit 27 dargestellt. In bzw. auf der Trägereinheit 27 sind ein erstes Gehäuse 28 des Sichtkanals 2, ein zweites Gehäuse 29 des Bilderfassungskanals 3, eine Verstellmechanik 30, das Schnittstellenmodul 24 und eine Prozessoreinheit 31 angeordnet.

Bei der Trägereinheit 27 kann es sich dabei um eine vormontierte Baugruppe handeln, welche bei einer Endmontage in den ersten Gehäuseteil 25 und den zweiten Gehäuseteil 26 eingeschoben wird. Hiermit wird eine einfache Montage des fernoptischen Geräts 1 ermöglicht. Die Trägereinheit 27 kann hierbei aus Aluminium hergestellt sein und das Gehäuse 4 bzw. der erste Gehäuseteil 25 und der zweite Gehäuseteil 26 aus Kunststoff.

An dem Bilderfassungskanal 3 ist des Weiteren ein Kameramodul 32 vorgesehen, wobei der Sichtkanal 2 und der Bilderfassungskanal 3 mittels der Verstellmechanik 30 derart miteinander gekoppelt sind, dass ein in dem Sichtkanal 2 betrachteter erster Bildausschnitt einem von dem Kameramodul 32 aufgenommenen zweiten Bildausschnitt weitgehend entspricht. Mittels einer Speichereinheit 33 können Parameter und/oder Funktionen in dem fernoptischen Gerät 1 abgespeichert werden. Über die Drahtlosverbindung 23 des fernoptisches Geräts 1 mit dem elektronischen Endgerät 11 können Parameter und/oder Funktionen von dem elektronischen Endgerät 11 an das fernoptische Gerät 1 übertragen werden und vice versa.

Zum Ausführen einer Funktion erfolgt eine Betätigung der einzigen an dem fernoptischen Gerät 1 vorgesehenen elektronischen Bedientaste 13, wobei ein Betätigungskontakt 34 betätigt wird.

Zur Ermittlung einer Betätigungsdauer umfasst die Bedientaste 13 eine erste Messvorrichtung 35, wobei bei einer ersten Betätigungsdauer eine erste Funktion ausführbar ist und bei einer zweiten, von der ersten Betätigungsdauer unterschiedlichen Betätigungsdauer eine zweite, von der ersten Funktion unterschiedliche Funktion ausführbar ist.

Zur Ermittlung eines Zeitintervalls zwischen aufeinander folgenden Betätigungen der Bedientaste 13 umfasst die Bedientaste 13 eine zweite Messvorrichtung 36, wobei bei einem ersten Zeitintervall eine erste Funktion ausführbar ist und bei einem zweiten Zeitintervall eine zweite, von der ersten Funktion unterschiedliche Funktion ausführbar ist.

Zur Ermittlung einer Betätigungskraft umfasst die Bedientaste 13 eine dritte Messvorrichtung 37, wobei bei einer ersten Betätigungskraft eine erste Funktion ausführbar ist und bei einer zweiten, von der ersten Betätigungskraft unterschiedlichen Betätigungskraft eine zweite, von der ersten Funktion unterschiedliche Funktion ausführbar ist.

Die erste Messvorrichtung 35, die zweite Messvorrichtung 36 und/oder die dritte Messvorrichtung 37 können gemäß einem nicht näher dargestellten Ausführungsbeispiel auch an dem Betätigungskontakt 34 angeordnet sein.

Die erste Messvorrichtung 35, die zweite Messvorrichtung 36 und die dritte Messvorrichtung 37 sind in der in der Fig. 5 dargestellten Ausführungsform mit der Prozessoreinheit 31 gekoppelt, wobei auf Basis der ermittelten Betätigungsdauer, des ermittelten Zeitintervalls und/oder der ermittelten Betätigungskraft die Funktionen ausführbar sind.

Das über die Drahtlosverbindung 23 mit dem fernoptischen Gerät 1 gekoppelte elektronische Endgerät 11 umfasst eine Anzeigevorrichtung 38, wie einen Bildschirm oder einen Touch-Bildschirm. Auf der Anzeigevorrichtung 38 kann ein mittels dem Kameramodul 32 des fernoptischen Gerät 1 aufgenommenes Bild bzw. Video angezeigt werden.

Die Aufnahme eines Bildes bzw. eine Bildsequenz kann dabei durch eine vordefinierte Betätigung der Bedientaste 13 erfolgen, z.B. einer Betätigung der Bedientaste 13 über eine Betätigungsdauer von 0,5 Sekunden. Bei Start der Aufnahme kann dabei ein akustisches Signal mittels der akustischen Ausgabeeinheit 12 ausgegeben werden.

Mittels einem in dem elektronischen Endgerät 11 vorgesehenen GPS-Empfänger 39 ist weiterhin der Standort des fernoptischen Geräts 1 ermittelbar.

Das in der Fig. 5 dargestellte Beobachtungs- und Bilderfassungssystem 20 umfasst ferner eine Servereinrichtung 40 mit einem Speichersystem 41. In der Servereinrichtung 40 ist dabei eine Anwendungssoftware installiert, auf welche das elektronische Endgerät 11 über eine zweite nicht näher dargestellte Verbindung bzw. Drahtlosverbindung zugreifen kann. Die Anwendungssoftware ist mittels dem elektronischen Endgerät 11 ausführbar. Teile der Anwendungssoftware können dabei in Form einer mobilen Applikation auf dem elektronischen Endgerät 11 installiert sein. Parameter und/oder Funktionen können dabei mittels der Anwendungssoftware auf dem elektronischen Endgerät 11 erstellt oder editiert werden, wobei Parameter und/oder Funktionen über die Verbindung 22 von dem elektronischen Endgerät 11 an das fernoptische Gerät 1 übertragbar sind und vice versa.

Parameter und/oder Funktionen können dabei in einer nicht näher dargestellten Ausführungsform von einem elektronischen Endgerät 11 an eine Mehrzahl von fernoptischen Geräten 1 übertragen werden und vice versa.

Bei den Funktionen kann es sich dabei um das Einschalten des fernoptischen Geräts 1, das Ausschalten des fernoptischen Geräts 1, das Koppeln des fernoptischen Geräts 1 mit dem elektronischen Endgerät 11, die Aufnahme eines Bildes mittels dem Bilderfassungskanal 3, die Aufnahme einer Bildsequenz bzw. eines Videos mittels dem Bilderfassungskanal 3 handeln, welche durch die Betätigung der Bedientaste 13 ausgeführt bzw. gestartet werden.

Die Auswahl einer Mehrzahl aus der Gruppe von Parametern und Funktionen kann dabei unmittelbar nacheinander erfolgen. Der Programmablauf einer Mehrzahl von ausgewählten Funktionen kann weitgehend parallel erfolgen oder aber auch zeitversetzt. Der Programmablauf erfolgt dabei mittels der Anwendungssoftware des gekoppelten elektronischen Endgeräts 11.

Ein mittels dem Kameramodul 32 des fernoptischen Geräts 1 aufgenommenes Bild und/oder eine Bildsequenz ist weiterhin in dem Speichersystem 41 speicherbar.

Bei einer Anwendungssoftware bzw. einer mobilen Applikation kann es sich um eine erste mobile Applikation handeln, welche die Funktionen Live Streaming, Bildverwaltung und Einspielung von Updates für die Firmware des fernoptischen Geräts 1 bietet. Bei dem Live Streaming handelt es sich dabei um eine Echtzeitübertragung eines mittels dem Bilderfassungskanal 3 bzw. Kameramodul 32 aufgenommenen Bildes oder Videos an das gekoppelte elektronische Endgerät 11. Dabei ist es auch möglich, nicht nur ein einziges, sondern gleich mehrere Endgeräte zu koppeln, sodass mehrere Personen gleichzeitig den Livestream betrachten können. In weiterer Folge können Bilder bzw. Videos auf der Anzeigevorrichtung 38 des elektronischen Endgeräts 11 von einer Bedienperson betrachtet werden. Im Zuge der Bildverwaltung können übertragene Bildes oder Videos in einem Speicher 42 des elektronischen Endgeräts 11 gespeichert werden oder an das Speichersystem 41 übertragen und dort abgespeichert werden. Bei dem Speichersystem 41 kann es sich in einer nicht näher dargestellten Ausführungsform auch um einen Cloudspeicher handeln.

Bei einer zweiten mobilen Applikation kann es sich um eine Identifizierungsapplikation für Vögel handeln. Anhand eines mittels dem Bilderfassungskanal 3 bzw. Kameramodul 32 aufgenommenen Bildes eines Vogels, welches an das elektronische Endgerät 11 übertragen wird, kann die Art des Vogels mittels einer nicht näher dargestellten Bilddatenbank und einem Bilderkennungsalgorithmus erkannt werden. In weiterer Folge kann die Art des Vogels auf der Anzeigevorrichtung 38 des elektronischen Endgeräts 11 ausgegeben werden. Hierbei ist es weiterhin denkbar, dass Zusatzinformationen, wie eine Beschreibung der Art, eine Vogelstimme und/oder eine Darstellung des geografischen Vorkommens auf dem mobilen Endgerät 11 ausgegeben werden.

Bei einer dritten mobilen Applikation kann es sich um eine Identifizierungsapplikation für Berge handeln, wobei anhand eines aufgenommenen Bildes von Bergen, die Namen der Berggipfel ausgegeben werden.

Mittels einer vierten mobilen Applikation ist es weiterhin denkbar, dass ein aufgenommenes Bild oder eine Bildsequenz bzw. ein Video mit einer zweiten Bedienperson geteilt wird, wobei eine Übertragung an ein nicht näher dargestelltes zweites elektronisches Endgerät erfolgt.

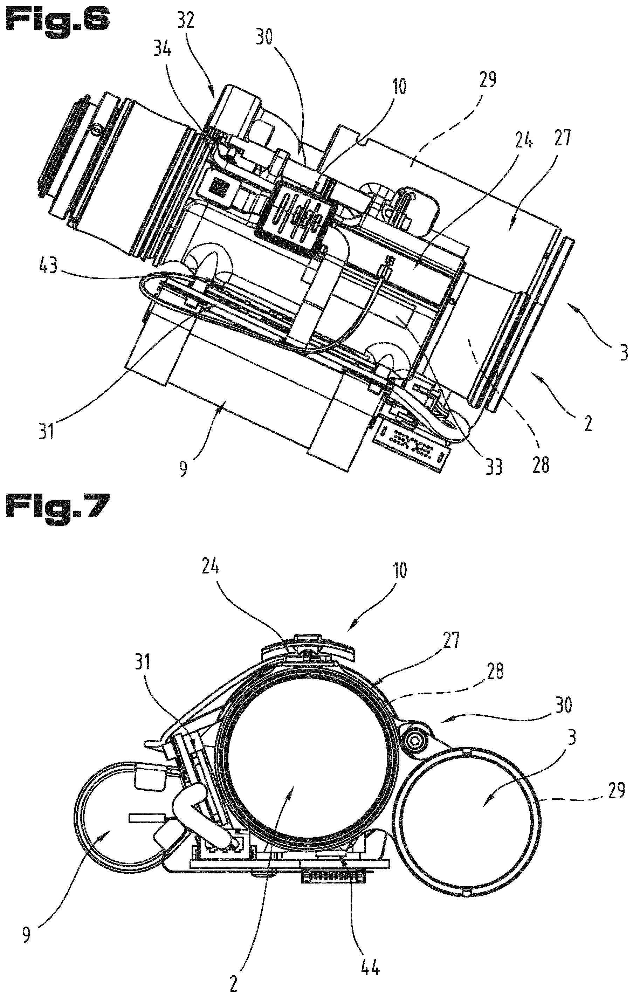

In den Fig. 6 und 7 ist eine weitere und gegebenenfalls für sich eigenständige Ausführungsform der Trägereinheit 27 des fernoptischen Geräts 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Fig. 6 zeigt eine erste perspektivische Ansicht der Trägereinheit 27 des fernoptischen Geräts 1 und Fig. 7 eine objektivseitige Ansicht der Trägereinheit 27 des fernoptischen Geräts.

Zum Thermomanagement sind zwischen der Trägereinheit 27 und der Prozessoreinheit 31 eine erste Wärmeableitvorrichtung 43 und zwischen der Trägereinheit 27 und dem ersten Gehäuse 28 des Sichtkanals 2 eine zweite Wärmeableitvorrichtung 44 ausgebildet. Die Abwärme der Prozessoreinheit 31 bzw. einem nicht näher dargestellten Spannungsregler wird über die erste Wärmeableitvorrichtung 43 an die Trägereinheit 27 weitergeleitet. Zur verbesserten Weiterleitung der Abwärme kann dabei die Trägereinheit 27 aus Aluminium hergestellt sein.

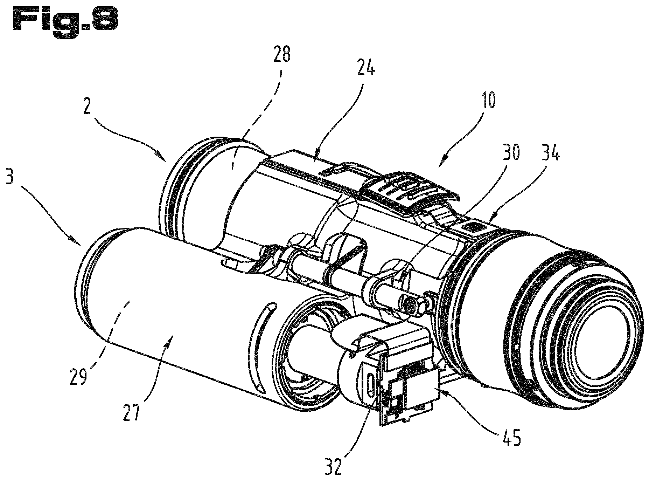

In der Fig. 8 ist eine weitere und gegebenenfalls für sich eigenständige Ausführungsform der Trägereinheit 27 des fernoptischen Geräts 1 gezeigt, wobei wiederum für gleiche Teile gleiche Bezugszeichen bzw. Bauteilbezeichnungen wie in den vorangegangenen Fig. 1 bis 7 verwendet werden. Um unnötige Wiederholungen zu vermeiden, wird auf die detaillierte Beschreibung in den vorangegangenen Fig. 1 bis 7 hingewiesen bzw. Bezug genommen.

Fig. 8 zeigt eine zweite perspektivische Ansicht der Trägereinheit 27 des fernoptischen Geräts 1. Zum Thermomanagement ist weiterhin eine dritte Wärmeableitvorrichtung 45 zwischen dem Gehäuse 4 des fernoptischen Geräts 1 und dem Kameramodul 32 ausgebildet. Eine thermische Ankopplung des Kameramoduls 32 bzw. des Bilderfassungskanals 3 an das Gehäuse 4 kann dabei über ein Wärmeleitblech aus Kupfer erfolgen.

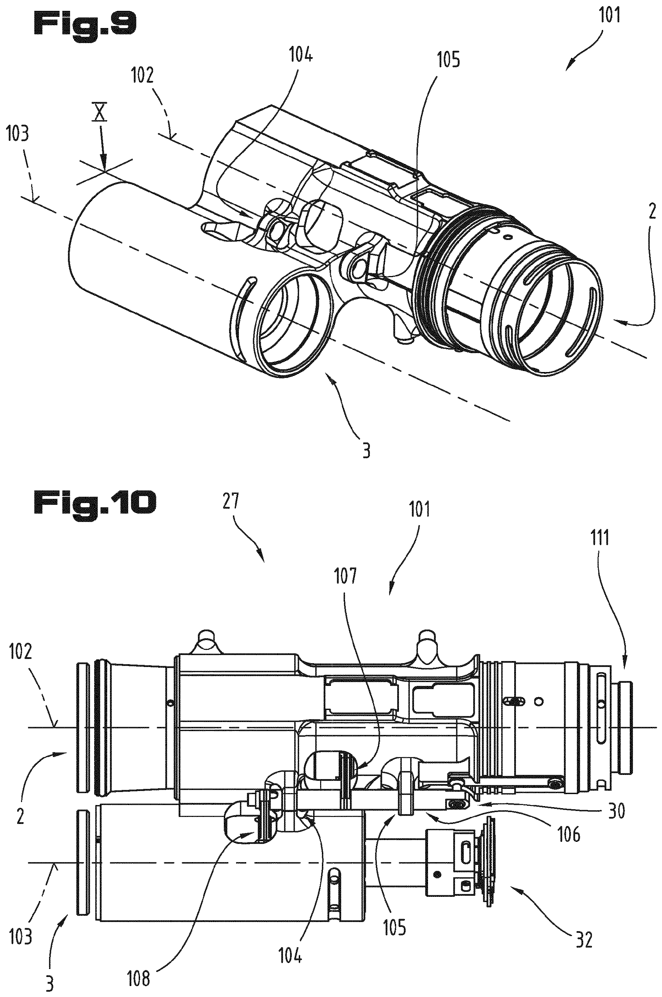

Die Fig. 9 zeigt den Trägerrahmen 101 der Trägereinheit 27 des fernoptischen Geräts 1 perspektivisch dargestellt. Aus Gründen der besseren Übersichtlichkeit sind dabei an dem Trägerrahmen 101 angeordnete Komponenten bzw. Baugruppen zum Aufbau der Trägereinheit 27 nicht dargestellt (Fig. 5). In zwei tubusförmigen Ausnehmungen des Trägerrahmens 101 finden der Sichtkanal 2 und der Bilderfassungskanal 3 Aufnahme, was auch durch eine erste optische Achse 102 des Sichtkanals 2 und eine zweite optische Achse 103 des Bilderfassungskanals 3 angedeutet ist. Der Trägerrahmen 101 ist vorzugsweise einteilig ausgebildet, wodurch eine genaue und stabile Ausrichtung des Sichtkanals 2 und des Bilderfassungskanals 3 relativ zueinander gewährleistet werden kann. An dem Trägerrahmen 101 sind auch eine erste und eine zweite Lagerbuchse 104, 105 zur Aufnahme einer Schubstange 106 der Verstellmechanik 30 erkennbar (Fig. 10).

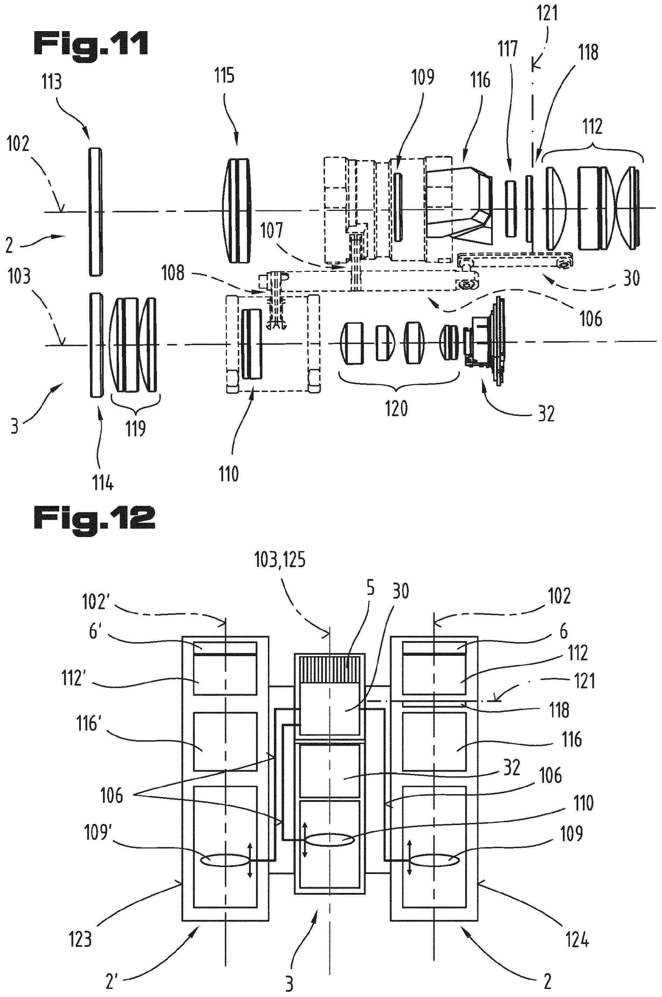

Die Fig. 10 zeigt eine Draufsicht auf die Trägereinheit 27, bei der der Trägerrahmen 101 gemeinsam mit optischen Bauteilen des Sichtkanals 2 und des Bilderfassungskanals 3 dargestellt ist. Die Darstellung entspricht dabei einer Draufsicht in Richtung senkrecht auf eine die optischen Achsen 102, 103 des Sichtkanals 2 bzw. des Bilderfassungskanals 3 enthaltenden Ebene. Die Schubstange 106 der Verstellmechanik 30 ist mittels eines ersten Mitnehmers 107 und eines zweiten Mitnehmers 108 mit entsprechenden verschiebbaren Linsenfassungen des Sichtkanals 2 und des Bilderfassungskanals 3 gekoppelt. Über entsprechende Steuernuten (nicht dargestellt) kann der Fokussierring 5 (Fig. 1) bei dessen Betätigung auf die Verstellmechanik 30 derart einwirken, dass die Schubstange 106 parallel zu den optischen Achsen 102, 103 bewegt wird. Durch die Kopplung an die Schubstange 106 mittels der Mitnehmer 107, 108 werden schließlich eine erste Fokussierlinse 109 des Sichtkanals 2 einerseits und eine zweite Fokussierlinse 110 des Bilderfassungskanals 3 andererseits (Fig. 11) in axialer Richtung verschoben. Der Fokussierring 5, die Schubstange 106 und die beiden Mitnehmern 107, 108 bilden somit eine erste Fokussiereinrichtung, mittels der die erste Fokussierlinse 109 des Sichtkanals 2 und die zweite Fokussierlinse 110 des Bilderfassungskanals 3 gemeinsam verschiebbar sind.

An dem beobachterseitigen Endbereich des Sichtkanals 2 des Trägerrahmens 101 ist andererseits auch eine Okularfassung 111 eines ersten Okulars 112 (ein aus mehreren Einzellinsen gebildetes Linsensystem) des Sichtkanals 2 erkennbar (Fig. 11). Die Okularlinsen 112 kann durch Betätigen bzw. durch ein Verdrehen des Dioptrierings 6 (Fig. 1) in Richtung der optischen Achse 102 verschoben werden. Auf diese Weise ist eine zweite Fokussiereinrichtung bei dem Sichtkanal 2 des fernoptischen Geräts 1 ausgebildet.

Die Fig. 11 zeigt die beiden optischen Systeme des Sichtkanals 2 und des Bilderfassungskanals 3, dargestellt anhand eines Querschnitts entsprechend einer Schnittebene mit den optischen Achsen 102, 103 des Sichtkanals 2 bzw. des Bilderfassungskanals 3. Zur besseren Übersichtlichkeit ist in der Darstellung des fernoptischen Geräts 1 in Fig. 11 auf die Darstellung anderer Komponenten als den für die optische Abbildung verantwortlichen Linsen bzw. Prismen weitestgehend verzichtet worden. Im Übrigen sei an dieser Stelle auch angemerkt, dass insofern in weiterer Folge von "Linsen" wie einer Okularlinse, einer Objektivlinse oder einer Fokussierlinse die Rede ist und der Begriff "Linse" in der Einzahl verwendet wird, dies nicht einschränkend zu verstehen ist, sondern dass damit gegebenenfalls auch ein System von mehreren Linsen gemeint ist bzw. gemeint sein kann. Dies ist in der technischen Optik zur Vermeidung bzw. Kompensation von Abbildungsfehlern allgemein üblich.

Sowohl bei dem Sichtkanal 2 als auch bei dem Bilderfassungskanal 3 ist objektseitig ein Deckglas 113 bzw. ein Deckglas 114 vorgesehen. Der Sichtkanal 2 enthält anschließend an das Deckglas 113 eine Objektivlinse 115, die Fokussierlinse 109, ein durch Prismen gebildetes Umkehrsystem 116, eine Feldlinse 117, eine Strichplatte 118 und die Okularlinse 112. Durch die genannten optischen Elemente wird ein erster Strahlengang zur vergrößerten Darstellung eines entfernten Gegenstands gebildet. Andererseits ist in dem Bilderfassungskanal 3 ein zweiter Strahlengang ausgebildet. Dessen optische Elemente sind, anschließend an das Deckglas 114, eine Objektivlinse 119, die Fokussierlinse 110, eine Okularlinse 120 und das Kameramodul 32. Die Objektivlinse 119, die Fokussierlinse 110 und die Okularlinse 120 des Bilderfassungskanals 3 bilden gemeinsam ein afokales Linsensystem. Das Kameramodul 32 wird vorzugsweise als Einheit mit einem elektronischen Bilderfassungssensor, einem eigenen Objektiv und mit einer integrierten Autofokusfunktion gebildet.

Durch strichlierte Linien angedeutet, sind in der Darstellung gemäß Fig. 11 auch Teile der Verstellmechanik 30, wie die Schubstange 106 und die beiden Mitnehmer 107, 108, zum gemeinsamen Verschieben der Fokussierlinse 109 des Sichtkanals 2 und der Fokussierlinse 110 des Bilderfassungskanals 3 eingezeichnet. Wie vorstehend schon erwähnt, ist auch die Okularlinse 112 in Richtung der optischen Achse 102 des Sehkanals 2 verschiebbar. Dies ermöglicht es einem Benutzer mit einer Betätigung des Dioptrierings 6 die Okularlinse 112 zunächst auf Markierungen (nicht dargestellt) an der Strichplatte 118 scharf einzustellen. Die Strichplatte 118 ist in dem Sichtkanal 2 in Richtung der optischen Achse 102 örtlich feststehend angeordnet. Durch die räumliche Anordnung der an der Strichplatte 118 vorgesehenen Markierungen wird somit eine Referenz-Bildebene 121 festgelegt.

Andererseits sind die an der Strichplatte 118 angebrachten Markierungen in der Weise angeordnet, dass einer Bedienperson bzw. einem Betrachter ein von dem Kameramodul 32 erfasster Bildausschnitt gekennzeichnet wird. Als Markierungen werden also vorzugsweise solche vorgesehen, durch die seitliche Ränder eines rechteckigen Bildausschnitts oder die Ecken des Bildausschnitts angezeigt werden.

Beim Bedienen des fernoptischen Geräts 1 zum Beobachten eines entfernten Gegenstands wird eine Person also so vorgehen, dass sie zunächst beim Blick durch den Sichtkanal 2 das Okular bzw. die Okularlinse 112 mittels des Dioptrierings 6 auf die Referenz-Bildebene 121 scharf einstellt. Daran anschließend kann - beim Ausrichten des fernoptischen Geräts 1 auf einen entfernten Gegenstand (bzw. beim Anvisieren) - ein Bild des entfernten Gegenstands durch Verdrehen des Fokussierrings 5 ebenfalls scharf eingestellt werden. Dieses Scharfstellen des Bilds des entfernten Gegenstands ist gleichbedeutend einer Verschiebung einer Bildebene des Bildes des entfernten Gegenstands, sodass diese möglichst exakt in der Referenz-Bildebene 121 zu liegen kommt. Für die Bedienperson erscheinen somit beim Blick durch das Okular 112 die Markierungen der Strichplatte 118 und das Bild des entfernten Gegenstands gleichermaßen scharf dargestellt.

Die Fokussierlinse 109 des Sichtkanals 2 ist in Bezug auf die Referenz-Bildebene 118 auf einer dem Okular 112 abgewandten Seite der Referenz-Bildebene 118 angeordnet. Dadurch sind das Fokussieren der Okularlinse 112 auf die Strichplatte 118 und das Fokussieren des Bildes des entfernten Gegenstands auf die Referenz-Bildebene 121 unabhängig voneinander durchführbar. Dies insofern, als eine Verschiebung der Fokussierlinse 109 des Sichtkanals 2 nicht zu einer Defokussierung der Okularlinse 112 auf die Strichplatte 118 führt, und umgekehrt.

Da die Fokussierlinse 109 des Sichtkanals 2 und die Fokussierlinse 110 des Bilderfassungskanals 3 durch ein Betätigen des Fokussierrings 5 und also eine Bewegung der Verstellmechanik 30 gemeinsam verschoben werden, bewirkt der vorstehend beschriebene zweite Scharfstellvorgang des Sichtkanals 2 (Verschieben der Fokussierlinse 109) gleichzeitig auch eine axiale Verschiebung der Bildebenen des entfernten Gegenstands in dem Strahlengang des Bilderfassungskanals 3. Diese Verschiebung der Bildebenen in dem Bilderfassungskanal 3 hat die Wirkung einer Voreinstellung bzw. einer Grobeinstellung der Bildschärfe des Bilderfassungskanals 3. Eine darauf folgende Feineinstellung der Bildschärfe wird schließlich durch die Autofokusfunktion der Kamera bzw. des Kameramoduls 32 bewirkt. Das durch die Autofokusfunktion des Kameramoduls 32 veränderbare Objektiv des Kameramoduls 32 wird dazu automatisch so verstellt, dass auf der lichtempfindlichen Sensoroberfläche ein scharfes Bild des entfernten Gegenstands abgebildet wird.

Die automatisch erfolgende Scharfeinstellung des Bilds in dem Bilderfassungskanal 3 mit der Autofokusfunktion des Kameramoduls 32 wird vorzugsweise unmittelbar nach Betätigen der elektronischen Bedientaste 13 zum Auslösen einer Bildaufzeichnung gestartet. Das in Gang setzen der Autofokusfunktion des Kameramoduls 32 kann aber alternativ auch programmgesteuert von der Prozessoreinheit 31 ausgelöst werden. Beispielsweise können mit Hilfe von gegebenenfalls vorgesehenen Sensoren Bewegungen der Fokussierlinse 109 und der Okularlinse 112 von der Prozessoreinheit 31 überwacht werden. Im Falle, dass die Prozessoreinheit 31 eine Aufeinanderfolge der Verstellung der Okularlinse 112 mit dem Dioptriering 6 und danach eine Verstellung der Fokussierlinse 109 durch Betätigen des Fokussierrings 5 feststellt, kann von der Prozessoreinheit 31 unmittelbar nach Ende der Bewegung der Fokussierlinse 109 die Autofokusfunktion des Kameramoduls 32 ausgelöst werden. Dies hat den Vorteil, dass im Falle der Verwendung der mobilen Applikation mit der Funktion eines Life-Streaming auf dem elektronischen Endgerät 11 jede Veränderung einer Scharfstellung des Sichtkanals 2 durch die das fernoptische Gerät 1 bedienende Person gleichzeitig auch zu einer entsprechenden Scharfstellung des Bildes auf dem elektronischen Endgerät 11 führt, ohne dass dazu die elektronische Bedientaste 13 neuerlich betätigt werden muss.

Bei der durch die Prozessoreinheit 31 initiierten Auslösung der Autofokusfunktion des Kameramoduls 32 ist vorzugsweise vorgesehen, dass alleine die Detektion eines Endes der Bewegung der Fokussierlinse 109 als Kriterium verwendet wird. Solange nämlich dieselbe Person das fernoptische Gerät 1 bedient, wird eine Neueinstellung der Okularlinse 112 zum Dioptrieausgleich nicht nötig sein. Die automatische Auslösung der Autofokussierung nach Beendigung einer manuellen Fokussierung hat weiters den Vorteil, dass bei Auslösung einer Bild/Videoaufnahme durch Betätigen der Bedientaste 13 eine nochmalige Autofokussierung entfallen kann. Dadurch wird der gesamte Aufnahmevorgang deutlich beschleunigt, da die Zeit zwischen der Auslösung und der tatsächlichen Bildaufnahme merklich verkürzt wird.

Mittels eines - gegebenenfalls - integrierten Kompasses kann das fernoptische Gerät 1, bzw. dessen Prozessoreinheit 31, erkennen, ob eine Beobachtungsphase, in der das fernoptische Gerät 1 auf ein entferntes und sich nicht bewegendes Objekt gerichtet ist (das Gerät befindet sich in Ruhe), stattfindet. Ist dies der Fall, so kann wie oben beschrieben nach Beendigung der manuellen die automatische Fokussierung gestartet werden. Ebenfalls ist denkbar, dass in der detektierten Beobachtungsphase eine automatische Bild/Videoaufnahme im Hintergrund gestartet wird. Das Bildmaterial kann z.B. nachträglich ausgewertet werden oder bei einer manuellen Auslösung Bildmaterial kurz vor/nach der Auslösung bereitstellen. Mit den im Hintergrund automatisch aufgenommenen Bildern wäre es auch möglich, mit einer Objektklassifizierung auch gleich eine automatische Selektion vorzunehmen (z.B. nur Vögel oder Gesichter).

Bei einer Darstellung eines von dem Kameramodul 32 aufgezeichneten Bildes auf der Anzeigevorrichtung 38 des elektronischen Endgeräts 11 des Beobachtungs- und Bilderfassungssystems 20 (Fig. 5) ist es auch möglich, dass eine Bedienperson an dem elektronischen Endgerät 11 eine Auswahl eines Bildausschnittes des wiedergegebenen Bildes vornimmt und in Reaktion darauf von dem Anwenderprogramm (der App) auf dem elektronischen Endgerät 11 das Kameramodul 32 des fernoptischen Geräts 1 angesteuert wird. Daraufhin erfolgt durch die Autofokuseinrichtung des Kameramoduls 32 eine neue Fokussierung auf ein entsprechendes Detail des am elektronischen Endgerät 11 ausgewählten Bildausschnitts. Bei sonst unveränderter Einstellung und Ausrichtung des fernoptischen Geräts 1 auf einen entfernten Gegenstand bzw. eine entsprechende Szenerie in dem Sehfeld können damit an dem elektronischen Endgerät 11 Scharfstellungen auf unterschiedliche Details bzw. unterschiedlich weit entfernte Gegenstände der dargestellten Szenerie bewirkt werden. Bei Verwendung einer durch einen Touchscreen gebildeten Anzeigevorrichtung 38 könnte dazu das einfache Berühren des Bildschirms an einer Stelle an dem ein Gegenstand dargestellt ist, eine solche neue Scharfstellung durch die Autofokuseinrichtung des Kameramoduls 32 auf eben diesen Gegenstand ausgelöst werden.

Die optischen Systeme des Sichtkanals 2 und des Bilderfassungskanals 3 des fernoptischen Geräts 1 gemäß diesem Ausführungsbeispiel sind nachstehend in den beiden Tabellen 1 und 2 anhand ihrer technischen Daten näher definiert.

In Tabelle 1 sind die optischen Daten des Linsensystems des Sichtkanals 2 angegeben. Dabei bezeichnet "m" die Nummer der Oberfläche, gemäß einer Zählweise beginnend am Objektseitigen Ende des Systems. Mit "r" wird der Radius der Krümmung der Oberfläche und mit "d" der Abstand zu der nächstfolgenden Oberfläche angegeben. Krümmungsradien und Abstände sind dabei in mm angegeben. Hinsichtlich der Vorzeichen der Krümmungsradien "r" der Oberflächen wird die auch sonst in der technischen Optik übliche Konvention zugrunde gelegt. D.h. der Radius wird angegeben als die Strecke vom Bezugspunkt der Oberfläche, d.h. dem Punkt, der mit der optischen Achse gemeinsam ist, hin zu ihrem Krümmungsmittelpunkt. Ist diese Richtung (vom Bezugspunkt der Oberfläche hin zu ihrem Krümmungsmittelpunkt) gleichgerichtet, wie die Richtung vom Objekt zum Beobachter (Hauptausbreitungsrichtung des Lichts, z-Koordinate), so hat der Radius ein positives Vorzeichen, andernfalls ist das Vorzeichen negativ. Durch die Angabe von "inf" (= "Infinity") für den Radius r wird eine plane Oberfläche bezeichnet. In der vierten Spalte, "Glas", ist die Glassorte in der Bezeichnungsweise der Kataloge der Firma Schott AG angegeben. Ein "L" steht für Luft zwischen den Glassorten zweier aufeinanderfolgender Linsen oder Platten.

**Tabelle 1:**

| m | r / mm | d / mm | Glas |
|---|---|---|---|
| 1 | inf | 2 | N-BK7 |
| 2 | inf | 30,3 | L |
| 3 | 47,627 | 5,2 | N-SK5 |
| 4 | -55,033 | 1,8 | N-LASF9 |
| 5 | -169,540 | 30 | L |
| 6 | -197,380 | 1,5 | N-FK5 |
| 7 | 158,700 | 12,7 | L |
| 8 | inf | 22,24 | N-BAK4 |
| 9 | inf | 1 | L |
| 10 | inf | 36,25 | N-BAK4 |
| 11 | int | 5,1 | L |
| 12 | -15,784 | 1 | N-BK7 |
| 13 | -255,750 | 2,62 | L |
| 14 | inf | 1,5 | N-BK7 |
| 15 | inf | 4,2 | L |
| 16 | -92,000 | 4,3 | N-LASF44 |
| 17 | -17,700 | 3,8 | L |
| 18 | -68,592 | 1 | FDS90 |
| 19 | 15,000 | 7,5 | N-PSK53A |
| 20 | -25,101 | 0,3 | L |
| 21 | 16,535 | 5,4 | N-LAF34 |
| 22 | 148,630 | | |

Die Tabelle 2 enthält die optischen Daten des Linsensystems des Bilderfassungskanals 3. Hier bezeichnet ein Eintrag "asph" in der zweiten Spalte eine asphärische Fläche einer Linse.

**Tabelle 2:**

| m | r / mm | d / mm | Glas |
|---|---|---|---|
| 1 | inf | 2 | N-BK7 |
| 2 | inf | 1,5 | L |
| 3 | 33,820 | 5,45 | FCD1 |
| 4 | -39,811 | 1,5 | N-LASF43 |
| 5 | 204,370 | 0,45 | L |
| 6 | 29,726 | 3,6 | FCD1 |
| 7 | 98,120 | 16,05 | L |
| 8 | 211,460 | 3,1 | N-SF6 |
| 9 | -27,600 | 1,3 | N-SF10 |
| 10 | 64,590 | 26,77 | L |
| 11 | 9,640 | 5 | N-LASF46A |
| 12 | 12,050 | 5,85 | L |
| 13 | asph | 2,74 | S-LAH60 |
| 14 | asph | 2,42 | L |
| 15 | 18,707 | 4,9 | N-LASF44 |
| 16 | -12,544 | 4 | L |
| 17 | 7,430 | 3,6 | N-LAK12 |
| 18 | -8,725 | 0,9 | N-LAF21 |
| 19 | -26,820 | | |

Anhand der Fig. 12 wird ein zweites Ausführungsbeispiel eines fernoptischen Geräts 1 beschrieben. Die Fig. 12 zeigt das fernoptische Gerät 1 schematisch vereinfacht dargestellt. Dieses umfasst neben dem Bilderfassungskanal 3 und dem Sichtkanal 2 einen parallel zu dem Sichtkanal 2 angeordneten zweiten Sichtkanal 2'. Das fernoptische Gerät 1 gemäß diesem Ausführungsbeispiel ist also in der Art eines Binokulars bzw. eines Fernglases ausgebildet. Die die beiden Sichtkanäle 2, 2' aufnehmenden Gehäuseteile 123, 124 sind durch eine Gelenksbrücke mit einer Schwenkachse 125 miteinander verbunden. Durch Verschwenken der beiden Gehäuseteile 123, 124 um die Schwenkachse 125 kann somit der Relativabstand zwischen den beiden Sichtkanälen 2, 102 an den Augenabstand eines Benutzers angepasst werden. Darüber hinaus ist der Bilderfassungskanal 3 derart angeordnet, dass dessen optische Achse 103 koaxial zu der Schwenkachse 125 positioniert ist. Ebenso ist vorgesehen, dass auch der Fokussierring 5 koaxial mit der Schwenkachse 125 angeordnet ist.

In der Fig. 12 sind nur jene, für die Ausbildung der Strahlengänge der beiden Sichtkanäle 2, 2' und des Bilderfassungskanals 3 unmittelbar in Zusammenhang stehenden, optischen Elemente dargestellt. Zusätzlich ist auch noch die Verstellmechanik 30 mit dem mit dieser in Verbindung stehenden Fokussierring 5 und mit den Schubstangen 106 gezeigt, durch deren Betätigung die Fokussierlinsen 109 der beiden Sichtkanäle 2, 2' und andererseits die Fokussierlinse 110 des Bilderfassungskanals 3 gemeinsam zur Scharfstellung verschoben werden können.

Die Maßnahmen zur Bedienung im Zusammenhang mit der Scharfstellung der Okularlinse 112 des ersten Sehkanals 2 auf die Referenzbildebene 121 und die anschließende Scharfstellung eines Bilds des entfernten Gegenstands auf dieselbe Referenzbildebene 121, wie sie vorstehend anhand des Ausführungsbeispiels gemäß den Fig. 9 bis 11 beschrieben sind, können in gleicher Weise auch bei diesem Ausführungsbeispiel des fernoptischen Geräts 1 angewendet werden. Unabhängig davon ist aber auch ein Dioptrieausgleich zwischen dem rechten und dem linken Auge eines Benutzers durch Verstellen der Okularlinse 112' des zweiten Sichtkanals 2' mit einem Dioptriering 6' möglich. Beim Bedienen des fernoptischen Geräts 1 gemäß diesem binokularen Ausführungsbeispiel kann also anschließend an die schon beschriebenen Fokussierungsschritte ein zusätzlicher Fokussiervorgang für den zweiten Sichtkanal 2' durchgeführt werden.

Das Verfahren zum Bedienen des fernoptischen Geräts 1 beim Beobachten eines entfernten Gegenstands umfasst - im Falle dieses Ausführungsbeispiels des fernoptischen Geräts 1 - die folgenden Schritte:
a) Fokussieren des ersten Sichtkanals 2 auf die Strichplatte 118 durch Betätigen des Dioptrierings 6 (zum Verschieben der Okularlinse 112);
b) Fokussieren des ersten Sichtkanals 2 auf einen entfernten Gegenstand durch Betätigen des Fokussierrings 5 (zum Verschieben der Fokussierlinsen 109, 109' und der Fokussierlinse 110 des Bilderfassungskanals 3);
c) Fokussieren des zweiten Sichtkanals 2' auf denselben entfernten Gegenstand durch Betätigen des Dioptrierings 6' (zum Verschieben der Okularlinse 112').

Nach Beendigung der Schritte a) und b) kann das Fokussieren des Bilderfassungskanals 3 durch die Autofokuseinrichtung automatisch erfolgen.

In einer weiteren alternativen Ausführung des fernoptischen Geräts 1 kann anstelle der Strichplatte 118, durch die die Lage der Referenzbildebene 121 bestimmt ist, auch ein in den Strahlengang des Sichtkanals 2 projiziertes Bild einer Strichplatte bzw. deren Markierungen verwendet werden. Ein solches Bild könnte dazu eine beleuchtete Maske aber auch ein elektronisches Display als Gegenstand haben. Eine weitere alternative Möglichkeit für die Bestimmung der Lage der Referenzbildebene 121 besteht in einem transparenten Display, das in dem Strahlengang am Ort der Referenzbildebene 121 angeordnet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | fernoptisches Gerät | 30 | Verstellmechanik |
| 2, 2' | Sichtkanal | 31 | Prozessoreinheit |
| 3 | Bilderfassungskanal | 32 | Kameramodul |
| 4 | Gehäuse | 33 | Speichereinheit |
| 5 | Fokussierring | 34 | Betätigungskontakt |
| 6, 6' | Dioptriering | 35 | erste Messvorrichtung |
| 7 | Anzeigeeinheit | 36 | zweite Messvorrichtung |
| 8 | Anzeigesegment | 37 | dritte Messvorrichtung |
| 9 | Energiespeicher | 38 | Anzeigevorrichtung |
| 10 | Beleuchtungseinheit | 39 | GPS-Empfänger |
| 11 | elektronisches Endgerät | 40 | Servereinrichtung |
| 12 | akustische Ausgabeeinheit | 41 | Speichersystem |
| 13 | elektronische Bedientaste | 42 | Speicher |
| 14 | Oberfläche | 43 | erste Wärmeableitvorrichtung |
| 15 | Vertiefung | | |
| 16 | Augenmuschel | 44 | zweite Wärmeableitvorrichtung |
| 17 | Zylinderstift | | |
| 18 | Buchse | 45 | dritte Wärmeableitvorrichtung |
| 19 | Deckel | | |
| 20 | Beobachtungs- und Bilderfassungssystem | 101 | Achse |
| | | 102, 102' | Achse |
| 21 | Smartphone | 103 | Lagerbuchse |
| 22 | Verbindung | 104 | Lagerbuchse |
| 23 | Drahtlosverbindung | 105 | Schubstange |
| 24 | Schnittstellenmodul | 106 | Mitnehmer |
| 25 | erster Gehäuseteil | 107 | Mitnehmer |
| 26 | zweiter Gehäuseteil | 108 | Fokussierlinse |
| 27 | Trägereinheit | 109, 109' | Fokussierlinse |
| 28 | erstes Gehäuse | 110 | Okularfassung |
| 29 | zweites Gehäuse | 111 | Okularlinse |
| 112, 112' | Deckglas | | |
| 113 | Deckglas | | |
| 114 | Objektivlinse | | |
| 115 | Umkehrsystem | | |
| 116, 116' | Feldlinse | | |
| 117 | Strichplatte | | |
| 118 | Objektivlinse | | |
| 119 | Okularlinse | | |
| 120 | Referenz-Bildebene | | |
| 121 | Sichtkanal | | |
| 122 | Gehäuseteil | | |
| 123 | Gehäuseteil | | |
| 124 | Schwenkachse | | |

## Patentansprüche

1. Fernoptisches Gerät (1) umfassend zumindest einen Sichtkanal (2) und einen Bilderfassungskanal (3) mit einem Kameramodul (32), wobei der Sichtkanal (2) und der Bilderfassungskanal (3) mittels einer Verstellmechanik (30) derart miteinander gekoppelt sind, dass ein in dem Sichtkanal (2) betrachteter erster Bildausschnitt einem von dem Kameramodul (32) aufgenommenen zweiten Bildausschnitt weitgehend entspricht; zumindest ein Schnittstellenmodul (24) zum Aufbau einer Verbindung (22) mit einem elektronischen Endgerät (11); eine Prozessoreinheit (31);
- zumindest eine Speichereinheit (33), wobei die Speichereinheit (33) zur Aufnahme von Funktionen und vorzugsweise Parametern ausgebildet ist;
- und eine elektronische Bedientaste (13),
- wobei das Auswählen einer Funktion aus den in der Speichereinheit (33) aufgenommenen Funktionen durch eine Art der Betätigung der elektronischen Bedientaste (13) definiert ist und das fernoptische Gerät (1) dazu eingerichtet ist die Funktion durch die entsprechende Betätigung der Bedientaste (13) auszuführen,
- **dadurch gekennzeichnet, dass** die Art der Betätigung der elektronischen Bedientaste (13) ausgewählt ist aus einer Gruppe, bestehend aus einer Betätigungsdauer der elektronischen Bedientaste (13), einer Betätigungskraft der elektronischen Bedientaste (13) und einem Zeitintervall zwischen aufeinander folgenden Betätigungen der elektronischen Bedientaste (13),
- wobei bei einer ersten Betätigungsdauer eine erste Funktion ausführbar ist und bei einer zweiten, von der ersten Betätigungsdauer unterschiedlichen Betätigungsdauer eine zweite, von der ersten Funktion unterschiedliche Funktion ausführbar ist,
- und wobei bei einer ersten Betätigungskraft eine erste Funktion ausführbar ist und bei einer zweiten, von der ersten Betätigungskraft unterschiedlichen Betätigungskraft eine zweite, von der ersten Funktion unterschiedliche Funktion ausführbar ist,
- und wobei bei einem ersten Zeitintervall zwischen einer ersten Betätigung und einer zweiten Betätigung eine erste Funktion ausführbar ist und bei einem zweiten Zeitintervall zwischen einer dritten Betätigung und einer vierten Betätigung eine zweite, von der ersten Funktion unterschiedliche Funktion ausführbar ist,
- und wobei die erste Funktion und die zweite Funktion ausgewählt sind aus der Gruppe bestehend aus Einschalten des fernoptischen Geräts (1), Ausschalten des fernoptischen Geräts (1), Koppeln des fernoptischen Geräts (1) mit dem elektronischen Endgerät, Aufnahme eines Bildes mittels dem Bilderfassungskanal (3), Aufnahme eines Videos mittels dem Bilderfassungskanal (3).

2. Fernoptisches Gerät (1) nach Anspruch 1, **dadurch gekennzeichnet, dass** das fernoptische Gerät (1) eine einzige elektronische Bedientaste (13) zum Ausführen einer Mehrzahl der Funktionen aufweist.

3. Fernoptisches Gerät (1) nach Anspruch 1 oder 2, **dadurch gekennzeichnet, dass** es eine Anzeigeeinheit (7) umfasst, die auf einem Gehäuse (4) des fernoptischen Geräts (1) angeordnet ist, und mittels welcher die Ausführung der Funktion visualisierbar ist.

4. Fernoptisches Gerät (1) nach einem der vorhergehenden Ansprüche, **dadurch gekennzeichnet, dass** das Schnittstellenmodul (24) zum Aufbau der Verbindung (22) als Drahtlosverbindung (23) ausgebildet ist.

5. Fernoptisches Gerät (1) nach Anspruch 4, **dadurch gekennzeichnet, dass** mittels der Drahtlosverbindung (23) das durch ein Smartphone (21) ausgebildete elektronische Endgerät (11) mit dem fernoptischen Gerät (1) koppelbar ist.

6. Fernoptisches Gerät (1) nach einem der vorhergehenden Ansprüche, **dadurch gekennzeichnet, dass** die Bedientaste (13) eine erste Messvorrichtung (35) zur Ermittlung der Betätigungsdauer umfasst, die Bedientaste (13) eine zweite Messvorrichtung (36) zur Ermittlung des Zeitintervalls zwischen aufeinander folgenden Betätigungen der Bedientaste (13) umfasst und die Bedientaste (13) eine dritte Messvorrichtung (37) zur Ermittlung der Betätigungskraft umfasst, wobei die erste Messvorrichtung (35) und die zweite Messvorrichtung (36) und die dritte Messvorrichtung (37) mit der Prozessoreinheit (31) gekoppelt sind, wobei auf Basis der ermittelten Betätigungsdauer, des ermittelten Zeitintervalls und/oder der ermittelten Betätigungskraft eine der Funktionen, die erste Funktion oder die zweite Funktion, ausführbar sind.

7. Fernoptisches Gerät (1) nach einem der vorhergehenden Ansprüche, **dadurch gekennzeichnet, dass** dieses eine Trägereinheit (27) umfasst, in welcher Trägereinheit (27) zumindest ein erstes Gehäuse (28) des Sichtkanals (2), ein zweites Gehäuse (29) des Bilderfassungskanals (3), die Verstellmechanik (30), das Schnittstellenmodul (24) und die Prozessoreinheit (31) angeordnet sind.

8. Fernoptisches Gerät (1) nach Anspruch 7, **dadurch gekennzeichnet, dass** zwischen der Trägereinheit (27) und der Prozessoreinheit (31) eine erste Wärmeableitvorrichtung (43) ausgebildet ist und/oder dass zwischen der Trägereinheit (27) und dem ersten Gehäuse (28) des Sichtkanals (2) eine zweite Wärmeableitvorrichtung (44) ausgebildet ist und/oder dass zwischen einem Gehäuse (4) des fernoptischen Geräts (1) und dem Kameramodul (32) eine dritte Wärmeableitvorrichtung (45) ausgebildet ist, wobei das Gehäuse (4) des fernoptischen Geräts (1) einen ersten Gehäuseteil (25) und einen zweiten Gehäuseteil (26) umfasst, in denen in einem zusammengebauten Zustand des fernoptischen Geräts (1) die Trägereinheit (27) aufgenommen ist.

9. Beobachtungs- und Bilderfassungssystem (20) umfassend ein fernoptisches Gerät (1) nach einem der Ansprüche 1 bis 8 und ein elektronisches Endgerät (11), **dadurch gekennzeichnet, dass** das fernoptische Gerät (1) und das elektronische Endgerät (11) über die Verbindung (22) zumindest zeitweise miteinander gekoppelt sind.

10. Beobachtungs- und Bilderfassungssystem (20) nach Anspruch 9, **dadurch gekennzeichnet, dass** das elektronische Endgerät (11) eine Anzeigevorrichtung (38) umfasst, auf welcher Anzeigevorrichtung (38) ein mittels dem Kameramodul (32) des fernoptischen Geräts (1) aufgenommenes Bild und/oder eine Bildsequenz anzeigbar ist.

11. Beobachtungs- und Bilderfassungssystem (20) nach einem der Ansprüche 9 oder 10, **dadurch gekennzeichnet, dass** dieses eine Servereinrichtung (40) umfasst, auf der eine Anwendungssoftware installiert ist, wobei auf die Anwendungssoftware mittels dem elektronischen Endgerät (11) zugreifbar ist und/oder wobei die Anwendungssoftware mittels dem elektronischen Endgerät (11) ausführbar ist.

12. Beobachtungs- und Bilderfassungssystem (20) nach Anspruch 11, **dadurch gekennzeichnet, dass** die Servereinrichtung (40) ein Speichersystem (41) umfasst, in welchem ein mittels dem Kameramodul (32) des fernoptischen Geräts (1) aufgenommenes Bild und/oder eine Bildsequenz speicherbar ist.

13. Beobachtungs- und Bilderfassungssystem (20) nach einem der Ansprüche 11 oder 12, **dadurch gekennzeichnet, dass** die Funktionen mittels der Anwendungssoftware auf dem elektronischen Endgerät (11) erstellbar und/oder editierbar sind, wobei die Funktionen über die Verbindung (22) von dem elektronischen Endgerät (11) an das fernoptische Gerät (1) übertragbar sind und vice versa.

## Claims

1. A long-range optical device (1) comprising at least one sight channel (2) and an image capturing channel (3) with a camera module (32), wherein the sight channel (2) and the image capturing channel (3) are coupled to one another by means of an adjusting mechanism (30) such that a first image detail observed in the sight channel (2) essentially corresponds to a second image detail captured by the camera module (32); at least one interface module (24) for establishing a connection (22) with an electronic terminal (11); a processing unit (31);
- at least one memory unit (33), wherein the memory unit (33) is formed for storing functions and preferably parameters;
- and an electronic operating button (13),
- wherein the selection of a function from the functions stored in the memory unit (33) is defined by a type of actuation of the electronic operating button (13) and the long-range optical device (1) is configured to execute the function by the corresponding actuation of the operating button (13),
- **characterized in that** the type of actuation of the electronic operating button (13) is selected from a group consisting of an actuating period of the electronic operating button (13), an actuating force of the electronic operating button (13) and a time interval between subsequent actuations of the electronic operating button (13),
- wherein in case of a first actuating period, a first function can be executed and in case of a second actuating period differing from the first actuating period, a second function differing from the first function can be executed,
- and wherein in case of a first actuating force, a first function can be executed and in case of a second actuating force differing from the first actuating force, a second function differing from the first function can be executed,
- and wherein in case of a first time interval between a first actuation and a second actuation, a first function can be executed, and in case of second time interval between a third actuation and a fourth actuation, a second function differing from the first function can be executed,
- and wherein the first function and the second function are selected from the group of switching on the long-range optical device (1), switching off the long-range optical device (1), coupling the long-range optical device (1) to the electronic terminal, capturing an image by means of the image capturing channel (3), capturing a video by means of the image capturing channel (3).

2. The long-range optical device (1) according to claim 1, **characterized in that** the long-range optical device (1) comprises a single electronic operating button (13) for executing a plurality of functions.

3. The long-range optical device (1) according to claim 1 or 2, **characterized in that** it comprises a display unit (7) which is arranged on the housing (4) of the long-range optical device (1) and by means of which the execution of the function can be visualized.

4. The long-range optical device (1) according to one of the preceding claims, **characterized in that** the interface module (24) is configured for establishing the connection (22) as a wireless connection (23).

5. The long-range optical device (1) according to claim 4, **characterized in that** the electronic terminal (11) configured as a smartphone (21) can be coupled to the long-range optical device (1) by means of the wireless connection (23).

6. The long-range optical device (1) according to one of the preceding claims, **characterized in that** the operating button (13) comprises a first measuring device (35) for determining the actuating period, the operating button (13) comprises a second measuring device (36) for determining the time interval between subsequent actuations of the operating button (13), and the operating button (13) comprises a third measuring device (37) for determining the actuating force, wherein the first measuring device (35) and the second measuring device (36) and the third measuring device (37) are coupled to the processing unit (31), wherein based on the determined actuating period, the determined time interval and/or the determined actuating force, one of the functions, the first function or the second function, can be executed.

7. The long-range optical device (1) according to one of the preceding claims, **characterized in that** it comprises a support unit (27), in which support unit (27) at least one first housing (28) of the sight channel (2), a second housing (29) of the image capturing channel (3), the adjusting mechanism (30), the interface module (24) and the processing unit (31) are arranged.

8. The long-range optical device (1) according to claim 7, **characterized in that** a first heat dissipation device (43) is formed between the support unit (27) and the processing unit (31) and/or that a second heat dissipation device (44) is formed between the support unit (27) and the first housing (28) of the sight channel (2) and/or that a third heat dissipation device (45) is formed between the housing (4) of the long-range optical device (1) and the camera module (32), wherein the housing (4) of the long-range optical device (1) comprises a first housing part (25) and a second housing part (26), in which the support unit (27) is accommodated in the assembled state of the long-range optical device (1).

9. An observation and image capturing system (20) comprising a long-range optical device (1) according to one of claims 1 to 8 and an electronic terminal (11), **characterized in that** the long-range optical device (1) and the electronic terminal (11) are coupled to one another via the connection (22) at least temporally.

10. The observation and image capturing system (20) according to claim 9, **characterized in that** the electronic terminal (11) comprises a display device (38), on which display device (38) an image and/or an image sequence captured by means of the camera module (32) of the long-range optical device (1) can be displayed.

11. The observation and image capturing system (20) according to one of claims 9 or 10, **characterized in that** it comprises a server device (40), on which an application software is installed, wherein the application software can be accessed by means of the electronic terminal (11) and/or wherein the application software can be executed by means of the electronic terminal (11).

12. The observation and image capturing system (20) according to claim 11, **characterized in that** the server device (40) comprises a memory system (41), in which an image and/or an image sequence captured by means of the camera module (32) of the long-range optical device (1) can be stored.

13. The observation and image capturing system (20) according to one of claims 11 or 12, **characterized in that** the functions can be created and/or edited by means of the application software on the electronic terminal (11), wherein the functions can be transmitted from the electronic terminal (11) to the long-range optical device (1) and vice versa via the connection (22).

## Revendications

1. Appareil téléoptique (1) comprenant au moins un canal de vision (2) et un canal de capture d'image (3) avec un module de caméra (32), le canal de vision (2) et le canal de capture d'image (3) étant couplés l'un à l'autre au moyen d'un mécanisme de réglage (30) de telle sorte qu'un premier extrait d'image observé dans le canal de vision (2) corresponde largement à un deuxième extrait d'image enregistré par le module de caméra (32) ; au moins un module d'interface (24) pour établir une liaison (22) avec un terminal électronique (11) ; une unité de traitement (31) ;
- au moins une unité de mémoire (33), l'unité de mémoire (33) étant conçue pour enregistrer des fonctions et, de préférence, des paramètres ;
- et une touche de commande électronique (13),
- la sélection d'une fonction parmi les fonctions enregistrées dans l'unité de mémoire (33) étant définie par un type d'actionnement de la touche de commande électronique (13) et l'appareil téléoptique (1) étant conçu pour exécuter la fonction par l'actionnement correspondant de la touche de commande (13),
**caractérisée en ce que**
le type d'actionnement de la touche de commande électronique (13) est sélectionné parmi un groupe composé d'une durée d'actionnement de la touche de commande électronique (13), d'une force d'actionnement de la touche de commande électronique (13) et d'un intervalle de temps entre des actionnements successifs de la touche de commande électronique (13),
- une première fonction pouvant être exécutée pour une première durée d'actionnement et une deuxième fonction, différente de la première fonction, pouvant être exécutée pour une deuxième durée d'actionnement différente de la première durée d'actionnement,
- et une première fonction pouvant être exécutée avec une première force d'actionnement et une deuxième fonction, différente de la première fonction, pouvant être exécutée avec une deuxième force d'actionnement différente de la première force d'actionnement,
- et la première fonction pouvant être exécutée pendant un premier intervalle de temps entre une première action et une deuxième action, et une deuxième fonction différente de la première fonction pouvant être exécutée pendant un deuxième intervalle de temps entre une troisième action et une quatrième action,
- et la première fonction et la deuxième fonction étant sélectionnées parmi le groupe composé de la mise sous tension de l'appareil téléoptique (1), la mise hors tension de l'appareil téléoptique (1), le couplage de l'appareil téléoptique (1) avec le terminal électronique, la prise d'une image au moyen du canal de capture d'image (3), la prise d'une vidéo au moyen du canal de capture d'image (3).

2. Appareil téléoptique (1) selon la revendication 1, **caractérisé en ce que** l'appareil téléoptique (1) présente une seule touche de commande électronique (13) pour exécuter une pluralité de fonctions.

3. Appareil téléoptique (1) selon la revendication 1 ou 2, **caractérisé en ce qu'**il comprend une unité d'affichage (7) qui est agencée sur un boîtier (4) de l'appareil téléoptique (1) et au moyen de laquelle l'exécution de la fonction peut être visualisée.

4. Appareil téléoptique (1) selon l'une des revendications précédentes, **caractérisé en ce que** le module d'interface (24) pour établir la liaison (22) est conçu comme une liaison sans fil (23).

5. Appareil téléoptique (1) selon la revendication 4, **caractérisé en ce que** la liaison sans fil (23) permet de coupler le terminal électronique (11) formé par un smartphone (21) à l'appareil téléoptique (1).

6. Appareil téléoptique (1) selon l'une des revendications précédentes, **caractérisé en ce que** la touche de commande (13) comprend un premier dispositif de mesure (35) pour déterminer la durée d'actionnement,
la touche de commande (13) comprend un deuxième dispositif de mesure (36) pour déterminer l'intervalle de temps entre des actionnements successifs de la touche de commande (13) et la touche de commande (13) comprend un troisième dispositif de mesure (37) pour déterminer la force d'actionnement,
le premier dispositif de mesure (35), le deuxième dispositif de mesure (36) et le troisième dispositif de mesure (37) étant couplés à l'unité de traitement (31), l'une des fonctions, à savoir la première fonction ou la deuxième fonction, pouvant être exécutée sur la base de la durée d'actionnement déterminée, de l'intervalle de temps déterminé et/ou de la force d'actionnement déterminée.

7. Appareil téléoptique (1) selon l'une des revendications précédentes, **caractérisé en ce qu'**il comprend une unité de support (27) et **en ce que** sont agencés, dans l'unité de support (27), au moins un premier boîtier (28) du canal de vision (2), un deuxième boîtier (29) du canal de capture d'image (3), le mécanisme de réglage (30), le module d'interface (24) et l'unité de traitement (31).

8. Appareil téléoptique (1) selon la revendication 7, **caractérisé en ce qu'**un premier dispositif de dissipation thermique (43) est formé entre l'unité de support (27) et l'unité de traitement (31) et/ou **en ce qu'**un deuxième dispositif de dissipation thermique (44) est formé entre l'unité de support (27) et le premier boîtier (28) du canal de vision (2) et/ou **en ce qu'**un troisième dispositif de dissipation thermique (45) est formé entre un boîtier (4) de l'appareil téléoptique (1) et le module de caméra (32), le boîtier (4) de l'appareil téléoptique (1) comprenant une première partie de boîtier (25) et une deuxième partie de boîtier (26) dans lesquelles l'unité de support (27) est logée lorsque l'appareil téléoptique (1) est assemblé.

9. Système d'observation et de capture d'images (20) comprenant un appareil téléoptique (1) selon l'une des revendications 1 à 8 et un terminal électronique (11), **caractérisé en ce que** l'appareil téléoptique (1) et le terminal électronique (11) sont couplés entre eux au moins temporairement via la liaison (22).

10. Système d'observation et de capture d'images (20) selon la revendication 9, **caractérisé en ce que** le terminal électronique (11) comprend un dispositif d'affichage (38), une image et/ou une séquence d'images enregistrée au moyen du module de caméra (32) de l'appareil téléoptique (1) pouvant s'afficher sur le dispositif d'affichage (38).

11. Système d'observation et de capture d'images (20) selon l'une des revendications 9 ou 10, **caractérisé en ce qu'**il comprend un dispositif serveur (40) sur lequel est installé un logiciel d'application, le logiciel d'application étant accessible au moyen du terminal électronique (11) et/ou le logiciel d'application pouvant être exécuté au moyen du terminal électronique (11).

12. Système d'observation et de capture d'images (20) selon la revendication 11, **caractérisé en ce que** le dispositif serveur (40) comprend un système de mémoire (41) dans lequel une image et/ou une séquence d'images enregistrée au moyen du module de caméra (32) de l'appareil téléoptique (1) peut être stockée.

13. Système d'observation et de capture d'images (20) selon l'une des revendications 11 ou 12, **caractérisé en ce que** les fonctions peuvent être créées et/ou modifiées à l'aide du logiciel d'application sur le terminal électronique (11), les fonctions pouvant être transmises via la liaison (22) du terminal électronique (11) à l'appareil téléoptique (1) et vice versa.
